(19) Europäisches Patentamt
European Patent Office
Office européen des brevets

(11) **EP 2 387 188 A2**

(12) **EUROPEAN PATENT APPLICATION**

(43) Date of publication:
**16.11.2011 Bulletin 2011/46**

(51) Int Cl.:
***H04L 25/02*** (2006.01)

(21) Application number: **11166003.1**

(22) Date of filing: **13.05.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **13.05.2010 CN 201010176728**

(71) Applicant: **Hitachi Ltd.**
**Tokyo 100-8280 (JP)**

(72) Inventors:
• **Zhou, Sheng**
**100084, Beijing (CN)**

• **Jia, Yunjian**
**Tokyo 100-8220 (JP)**
• **Yang, Peng**
**100190, Beijing (CN)**
• **Gong, Jie**
**100084, Beijing (CN)**
• **Niu, Zhisheng**
**100084, Beijing (CN)**
• **Geng, Lu**
**100190, Beijing (CN)**

(74) Representative: **MERH-IP**
**Matias Erny Reichl Hoffmann**
**Paul-Heyse-Strasse 29**
**80336 München (DE)**

(54) **Coordinated multipoint control aparatus and method**

(57) A communication control server of the present invention comprises: a network interface (412); a memory unit (612) in which a cluster information table (613) and a channel state information table (614) are stored; a channel state information recovery unit (608) acquiring a feedback message of a user equipment (100, 200) within a cluster (301) from a base station (1 to 6) via a network interface (412), wherein the cluster information table (613) holds a joint codebook (704) shared by the base stations (1 to 6) within the cluster, wherein the joint codebook (704) holds an identifier for determining channel state information (803) and a distribution of the channel state information (803), and wherein the feedback message includes an identifier corresponding to the channel state information (803) of the user equipment (100, 200).

FIG. 3

EP 2 387 188 A2

**Description**

BACKGROUND OF THE INVENTION

The present invention relates to facilities and methods for providing services in a mobile communication network, and in particular relates to a communication control server, a base station, and a user equipment in a coordinated multi-base station serving system. The mobile communication network here refers to the mobile communication system supporting a coordinated multi-base station service.

It has already been appreciated that Coordinated Multi-Point transmission/reception (CoMP) is a very good method for expanding the coverage of high-speed data services in a mobile network, improving the throughput around a cell, and improving the average throughput of the system. Hereinafter, the Coordinated Multi-Point transmission/reception will be abbreviated as the "coordinated service."

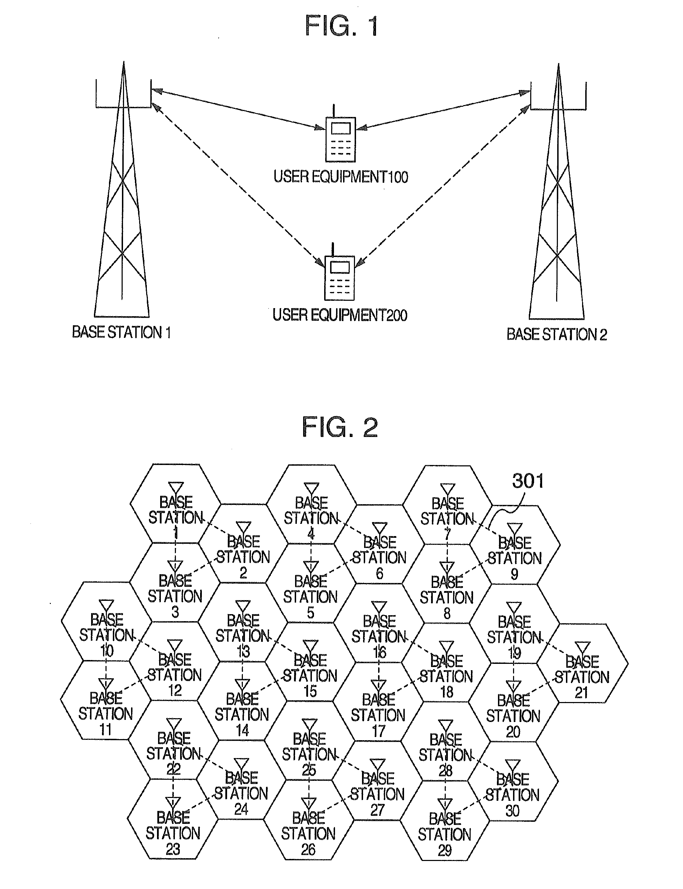

FIG. 1 is a model view illustrating a scene of the coordinated multi-base station service in a mobile network. In FIG. 1, two base stations: a base station 1 and a base station 2, perform services in a coordinated manner on one user equipment: a user equipment 100 or a user equipment 200, at the same time. In this system, the base station having the best channel state with respect to the user equipment 100 is a serving base station of the user equipment 100. The serving base station is the control base station of a user equipment, and the signaling interactive between the user equipment and an access network is performed via the serving base station. Moreover, in actual applications, in many cases, a plurality of base stations performs services on a plurality of user equipments at the same time.

Moreover, in the Coordinated Multi-Point transmission/reception, there is a need to perform clustering on all the base stations participating in collaboration, and a plurality of base stations within each cluster provides the coordinated multi-point service to a user equipment within the cluster. The "cluster" is a unit for dividing the respective base stations in a mobile communication network into groups and managing the same, and the clustering is categorized into a dynamic clustering and a static clustering. FIG 2 is an exemplary view of the static clustering in the coordinated multi-base station service.

In FIG 2, a plurality of base stations arranged in the mobile communication network is divided into a plurality of base station clusters 301 in a static clustering manner, and there are three base stations within each cluster 301. The dotted line in the view indicates the interface between the base stations within the same cluster, thereby partitioning the clusters from each other. Accordingly, 30 base stations are divided into 10 clusters, wherein a hexagonal area which each base station covers is a cell (in the cellular network radio communication system, the cell is a range which one transmitter covers and is a part of the entire service area). When the coordinated multi-base station service is performed in the environment of FIG 2, only three base stations within a certain cluster 301 can be coordinated and thus the coordinated service across the clusters cannot be performed. This method can advantageously eliminate the cost due to the dynamic clustering of base stations.

With regard to the application of the coordinated service, the system architecture and specifications of the 2nd generation and 3rd generation mobile communication networks have been developed by 3GPP (3rd Generation Partnership Project), and at present these specifications are already applied to the networks in which an air interface is arranged. Now, 3GPP is working to establish the Long Term Evolution-Advanced (LTE-advanced) directed to the 4th generation mobile communication network. In the course of establishing the specification of the LTE-advanced, the Coordinated Multi-Point transmission/reception has already been employed.

Since CoMP is a multi-cell multi-input/output system, in a multi-user transmission technique a transmit terminal is required to know accurate channel state information in advance, whereby in a space region, a suitable signal processing can be performed on a different target.

With regard to the acquisition of the channel state information, in a prior art (e.g., Chinese Patent CN200810035767.2), a feedback method based on an independent codebook is used. FIG 21 is a schematic view illustrating the method of feeding back the independent codebook in the prior art.

The "independent codebook" refers to a fact that each base station holds its own independent codebook and stores all the possible channel states of each corresponding base station into its own codebook.

SUMMARY OF THE INVENTION

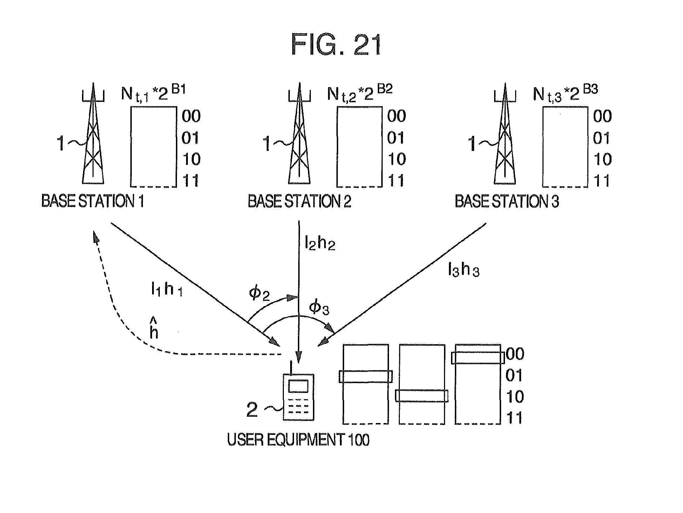

As shown in FIG 21, the user equipment 100 holds independent codebooks of all the base stations within the same cluster in advance, and quantizes CSI (Channel State Information) between the user equipment and a corresponding base station based on a plurality of codebooks currently held. The "quantization" herein refers to a fact that based on an actual channel state, the user equipment 100 selects, from each codebook which it holds, a code word (a set of symbols within the codebook) closest to the actual CSI value between the user equipment and a base station corresponding to this codebook, and feeds back a code (identifier) of each code word corresponding to the CSI value of each base station within the cluster to a serving base station. That is, a user equipment needs to feed back the respective CSI values between the user equipment and all the base stations belonging to the same cluster to a serving base station. At the same time, with regard to the coordinated multi-base station transmission based on the independent codebook, since the phase reference systems of different base stations differ from each other, there are relative phase differences between the base stations within the cluster and therefore the phase difference information between base stations also needs to be fed back.

Specifically speaking, in FIG 21, three base stations: base stations 1 - 3, constitute one cluster, and jointly perform the coordinated transmission service on the user equipment 100 (assume that the user equipment has a single antenna). In addition, assume that the serving base station is the base station 1. In performing the coordinated service, the base station 1 holds a codebook $N_{t,1}*2^{B1}$ the base station 2 holds a codebook $N_{t,2}*2^{B2}$, and the base station 3 holds a codebook $N_{t,3}*2^{B3}$. The user equipment 100 needs to hold the codebook $N_{t,1}*2^{B1}$, $N_{t,2}*2^{B2}$, and $N_{t,3}*2^{B3}$ of all the base stations within the cluster.

The channel state information which the user equipment 100 received is $h=[l_1 h_1^H, 1_2 h_2^H, 1_3 h_3^H]$, where I is width information and h is a channel direction indicator.

The channel state information can be expressed as Formula 1.

$$\hat{h} = \left[ l_1 \hat{h}_1^H, l_2 e^{j\varphi_2} \hat{h}_2^H, l_3 e^{j\varphi_3} \hat{h}_3^H \right] \quad (1)$$

In Formula 1, $1_1 \hat{h}_1^H$, $1_2 \hat{h}_2^H$, and $1_3 \hat{h}_3^H$ are the CSI of a single base station, $\varphi 2$ and $\varphi 3$ are the phase difference information of the respective base station 2 and base station 3 within the cluster relative to the serving base station used as the reference system, e is a mathematical constant (i.e., the base of natural logarithm).

In the codebook stored in each base station, the usable value of the channel state information is recorded. Moreover, in the codebook, there is also an identifier for determining the usable value of each channel state information. For example, in the case of the base station 1, the codebook $N_{t,1}*2^{B1}$ which the base station 1 holds indicates that this codebook is an $N_{t,1}$ dimensional codebook ($N_{t,1}$ is the number of antennas of the base station) and the size (the number of rows) of the codebook is $2^{B1}$. When B1=2, the number of rows of the codebook is 4, wherein the channel state information of each row needs to be confirmed using four identifiers, and wherein the identifiers can be set to 00, 01, 10, and 11.

After measuring the above-described channel state information, the user equipment 100 searches for a code word (a portion enclosed in the elongated frame in FIG 21) closest to the actual CSI from the codebook of the base station 1 currently held, according to a method such as the shortest Euclidean distance method, and determines an identifier corresponding to this code word and feeds back this identifier to the serving base station.

Similarly, since the base station 2 and base station 3 use its own codebook independent from the base station 1, respectively, the CSIs with respect to the base stations 2 and 3 of the user equipment 100 are also quantized using the same method and the corresponding identifier is fed back to its own serving base station. For this reason, a total feedback bits per one feedback is a total of the feedback bits of the base stations 1 to 3, i.e., B1+B2+B3. Moreover, with respect to clusters with the size of |C|, |C|-1 pieces of phase information between base stations further need to be fed back. That is, in order to quantize these pieces of phase information, additional $B_{Phase}$ bits are further required. For this reason, in the prior art, the number of bits which the user equipment 100 feeds back is at least $B=B1+B2+B3+B_{Phase}$.

In the above-described description, the codebook used for the quantization of phase information may be a Grassmannian codebook or the other expanded codebook. The detailed description of a specific method of calculating the code word in the codebook is omitted here because a conventional distribution map or the like can be used. Moreover, the detailed description of the shortest Euclidean distance method is omitted here because it is the codebook examination method often used in the prior art.

In the above-described independent codebook feedback method, each base station holds its own independent codebook and a user equipment feeds back the CSI information of all the base stations belonging to one cluster. Each independent codebook is not associated with each other.

For this reason, this method has three problems as follows.

Firstly, since the feedback channel capacity of a user equipment is limited, the identifier of the codebook corresponding to each base station and the phase information between base stations need to be fed back at the same time. For this reason, when the feedback channel capacity of a user equipment is insufficient, the resource allocated to each base station information is limited and the accuracy of feedback decreases, so that a further segmented codebook cannot be used.

Secondly, in the conventional method, other than the quantization error of CSI in a single cell, there is also a quantizing error in the phase information between cells. When allocation between two cells does not work well, the system performance will decrease significantly.

Thirdly, in the conventional method, CSI between a user equipment and all the base stations belonging to one cluster needs to be fed back. If the quantization is performed with the same number of bids on each channel without considering the number of bits actually required for each channel, i.e., without distinguishing the channel state of each channel, the feedback accuracy of a channel having a relatively good state cannot be guaranteed, resulting in a decrease in the performance of the multi base station service.

In the 3GPP RANI standardization organization, the problem of the feedback in the coordinated multi-base station service has been discussed many times. The standardization draft R1-100401 (3GPP RANI #59, Valencia, Spain, 18th-22nd, January, 2010) proposes to realize the multi-cell feedback by employing the codebook of a single cell and to feed back the phase difference information between cells if required (e.g., as in the coordinated transmission). Moreover, in the standardization draft R1-100935 (3GPP RAN1 #60, San Francisco, CA USA, 22nd-26th, February, 2010), the feedback costs due to different mechanisms in the downlink CoMP have been analyzed, and it is pointed out the feedback cost includes the feedback cost (cost due to vector quantization) of each cell and the feedback cost (cost due to scalar quantization) between cells. However, a method for solving these problems has not been presented.

The present invention has been made in view of the above-described circumstances and provides a communication control server, a base station, a user equipment, a coordinated serving system, and a method capable of improving the system performance by improving the accuracy of feedback with a limited feedback channel capacity.

According to one aspect of the present invention, there is provided a communication control server controlling communication, wherein a coordinated service is performed in a unit of a cluster by a plurality of base stations, the communication control server comprising: a network interface coupled to a network and communicating with a base station through the network; a memory unit in which a cluster information table and a channel state information table are stored; and a channel state information recovery unit acquiring a feedback message of a user equipment within a cluster from the base station via the network interface, wherein the cluster information table holds a cluster identifier, a base station identifier for identifying a base station within a cluster, and a joint codebook shared by the base stations within the cluster, wherein the joint codebook holds an identifier for determining channel state information and a distribution of the channel state information, and holds a user equipment identifier, the base station identifier, and the channel state information associated with each other in the channel state information table, and wherein the feedback message includes an identifier corresponding to the channel state information of the user equipment, extracts the channel state information corresponding to the identifier contained in the feedback message from the joint codebook, and updates the channel state information table stored in the memory unit using the extracted channel state information.

According to the present invention, a multi-base station joint codebook is used within a cluster, wherein in the joint codebook, with a plurality of base stations within a cluster as a unit, a distribution of channel state information of all the base stations within the cluster is expressed. Accordingly, only if a user equipment finds, based on an actually measured CSI in the joint codebook, an identifier of a code word corresponding to this CSI in the distribution of channel state information, then the channel state within a cluster which the user equipment belongs can be fed back by feeding back this identifier, so that the accuracy of feedback can be improved and the system performance can be improved with a limited feedback channel capacity.

Moreover, the distribution of channel state information in the joint codebook may be a vector matrix representing the distribution of channel state information. Expression of the channel state information using a vector matrix enables to express not only the channel state of the base station within a cluster but to express the phase information between the respective base stations.

Accordingly, in the present invention, when the joint codebook is used, there is no need to calculate the phase information and a user equipment easily feeds back an identifier, so that a device, such as the server, can calculate phase information using the feedback message and the joint codebook. Accordingly, the feedback channel capacity resource can be utilized more effectively.

Moreover, the feedback message may further include a feedback set of base station identifiers, and the channel state information recovery unit may tailor the joint codebook based on the feedback set and extract the channel state information from the tailored joint codebook.

Moreover, when the number of base station identifiers in the feedback set is smaller than the number of base stations within a cluster, the channel state information recovery unit may tailor the joint codebook based on the feedback set and extract the channel state information from the tailored joint codebook.

According to the present invention, the user equipment is capable of performing an adaptive feedback control and thus a feedback set is prepared on the user equipment side, so that only base station having relatively good channel state information can be fed back to perform the coordinated service and thereby the effective usage of the throughput can be improved and the accuracy of feedback of a relatively good channel can be guaranteed.

According to another aspect of the present invention, a user equipment comprises: a network interface coupled to a network and communicating with a base station through the network; a network measurement unit measuring a channel state of a wireless network; and a control unit controlling so that the network interface receives a joint codebook shared by base stations within a cluster, wherein the joint codebook holds an identifier for determining channel state information and a distribution of the channel state information, and wherein the control unit extracts from the joint codebook an identifier corresponding to the channel state information detected by the network measurement unit, generates a feedback message including the identifier, and transmits the feedback message to a base station via the network interface.

Moreover, the present invention may be further realized as a base station cooperating with the communication control server and the user equipment, and as a system comprising the communication control server, the user equipment, and the base station. Moreover, the present invention may be a coordinated servicing method in the system.

The results of simulation with respect to the present invention based on the above-described description have revealed the followings. If the coordinated service according to the present invention is used, the bits can be used for a relatively good channel and the system performance, e.g., the throughput, can be increased by 35% more than that in a method without the adaptive feedback control based on the commonly-used single-cell codebook, for example. In other words, the method according to the present invention can achieve the same performance as the conventional method, with a smaller number of bits. For this reason, the present invention can be expected to be widely applied to the radio communication field. Other objects, features, and advantages of the present invention will become apparent from the following description of the examples of the present invention in conjunction with the accompanying drawings.

BRIEF DESCRIPTION OF THE DRAWINGS

FIG 1 is a model view illustrating a scene of a coordinated multi-base station service in a mobile network.

FIG 2 is an exemplary view of static clustering in the coordinated multi-base station service.

FIG 3 is a model view illustrating a coordinated multi-base station serving system framework using a centralized controller.

FIG 4 is an exemplary view when a method of feeding back a multi-base station joint codebook is employed based on the centralized controller in the present invention.

FIG 5 is a schematic view illustrating an internal configuration (with two antennas) of a base station in the present invention.

FIG 6 is a schematic view illustrating an internal configuration (with one antenna) of a user equipment in the present invention.

FIG 7 is a schematic view illustrating an internal configuration of a centralized controller 300 in the present invention.

FIG 8 is an exemplary view of a cluster information table in the present invention.

FIG 9 is an exemplary view of a channel state information table in the present invention.

FIG 10 is an exemplary view of the joint codebook in the present invention.

FIG 11 is an exemplary view when the joint codebook is tailored in the present invention.

FIG 12 is an exemplary view when the feedback-set channel state information is quantized.

FIG 13 is a signal flow chart when a user equipment performs an adaptive feedback.

FIG 14 is a flow chart of an adaptive feedback method performed by the user equipment 100 in the present invention.

FIG 15 is a flow chart of a channel state information recovery method performed by the centralized controller 300.

FIG 16 is an exemplary view of the basic format of a feedback message of a user equipment transferred from a base station in the present invention.

FIG 17 is a schematic view illustrating a distribution type coordinated multi-base station serving system framework.

FIG 18 is a schematic view when a coordinated multi-base station service is performed based on the distribution type coordinated multi-base station serving system in the present invention.

FIG 19 is a signal flow chart when the adaptive feedback is performed based on the distribution type coordinated multi-base station serving system in the present invention.

FIG 20 is another signal flow chart when the adaptive feedback is performed based on the distribution type coordinated multi-base station serving system in the present invention (the control base station of a cluster is not the serving base station of a user equipment).

FIG 21 is a schematic view illustrating a method of feeding back an independent codebook in a prior art.

DETAILED DESCRIPTION OF THE INVENTION

[Example 1]

Hereinafter, preferred embodiments of the present invention will be described taking static clustering as an example with reference to the accompanying drawings. In the present invention, as shown in FIG 2, suppose that clusters are already divided in a static clustering manner. However, of course, dynamic clustering is applicable in the present invention.

For convenience of description, the embodiments of the present invention will be described using specific examples in a large framework based on the latest 3GPP LTE-A communication system. The present invention can be applied also to mobile communication networks supporting other coordinated multi-cell service.

Moreover, a cell in the conventional CoMP may have a range which "one base station", "one sector of a base station", "one home base station", "one relay station", or the like covers. For simplification of description, here, one cell is expressed by the range which one "base station" covers.

In a first embodiment of the present invention, a coordinated serving system feeds back channel state between a user equipment and a base station by means of the centralized controller 300. The centralized controller 300 may control base stations within each cluster in the coordinated serving system and act as an independent facility or may be integrated into a server or a gateway to control as a certain constituting portion thereof.

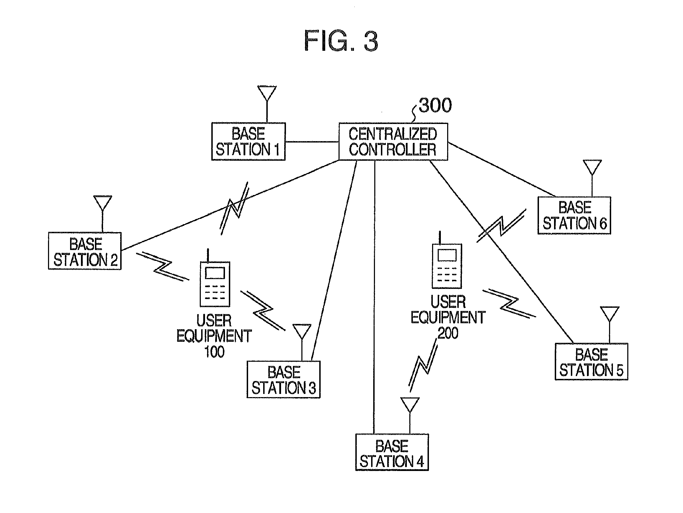

FIG 3 is a model view illustrating a coordinated multi-base station serving system framework using the centralized controller according to the first embodiment. In FIG 3, a plurality of base stations can perform wireless transmission services on a plurality of user equipments at the same time, and the centralized controller 300 adjusts the coordinated services of the related base stations. In this framework, a mobile cellular network comprises at least a plurality of base stations. A plurality of base stations communicate with one or more centralized controllers 300, and the centralized controller 300 adjusts the key parameter of the coordinated multi-base station service.

FIG 3 illustrates two clusters, wherein a cluster to which the user equipment 100 belongs comprises the base stations 1 to 3, and a cluster to which the user equipment 200 belongs comprises the base stations 4 to 6, and wherein the respective clusters are controlled as a unit by the centralized controller 300.

In this manner, the base stations, the user equipment, and the centralized controller constitute the coordinated multi-base station serving system according to the present invention.

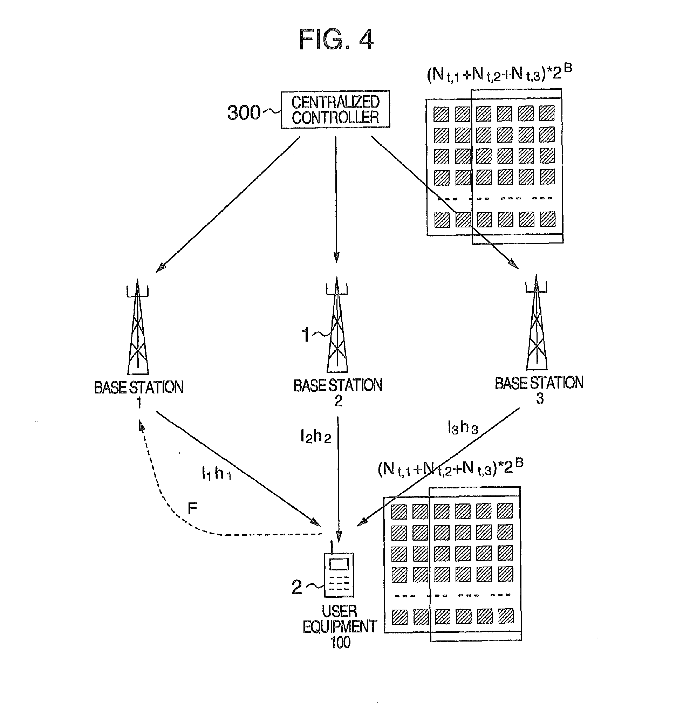

FIG 4 is an exemplary view when a method of feeding back a multi-base station joint codebook is employed based on the centralized controller in the present invention.

In FIG 4, three base stations constitute one cluster and jointly perform a coordinated transmission service on a user equipment (assume that the user equipment has a single antenna) via the centralized controller 300. Assume that the serving base station of the user equipment is the base station 1. The channel state information which the user equipment 100 received is $H= [1_1 h_1{}^H, 1_2 h_2{}^H, 1_3 h_3{}^H]$, where I is width information and h is a channel direction indicator. The centralized controller 300 notifies the joint codebook of this cluster to each base station. The joint codebook refers to one codebook shared by a plurality of base stations belonging to one cluster. The number of dimensions is a total of the number of antennas of the respective base stations, and is $N_{t,1}+N_{t,2}+N_{t,3}$ in this example. The size of the codebook is $2^B$, where B is the number of feedback bits specified by the system. Moreover, the joint codebook may be stored and placed in each base station within the cluster in advance.

Hereinafter, the specific internal configuration of each facility in the system will be described in detail.

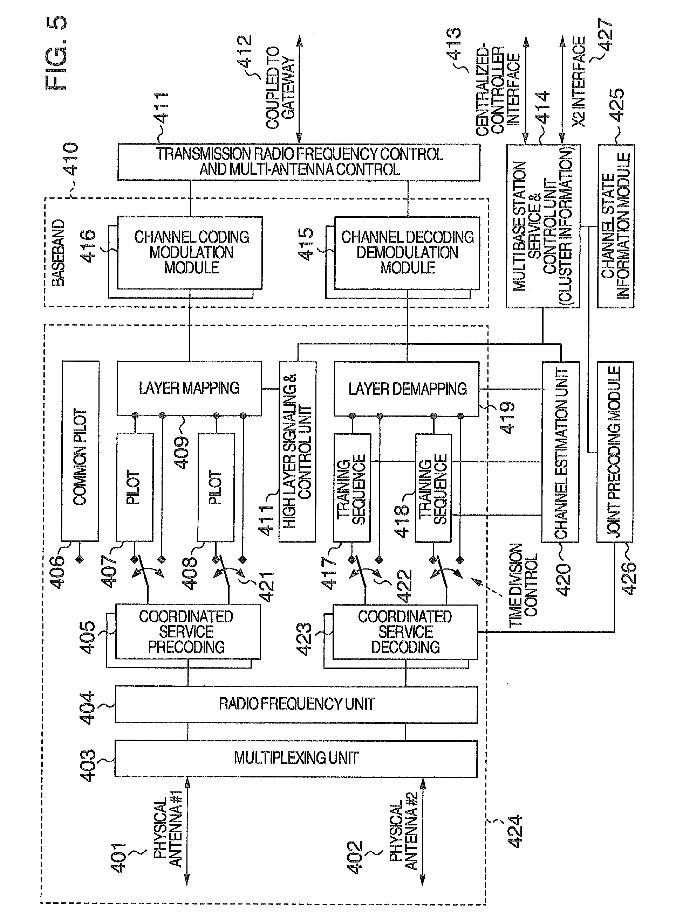

FIG 5 is a schematic view illustrating the internal configuration (with two antennas) of the base station in the present invention. In FIG 5, for simplification of description, the number of antennas of any one of the base stations within a cluster is assumed to be two, however the number of antennas of the base station is not limited in particular.

As shown in FIG 5, the base station performing a coordinated multi-base station service mainly comprises: a high frequency module 424, a baseband module 410, a high layer signaling & control unit 411, a network interface module 412 communicating with a gateway, a multi base station service & control unit 414, a centralized controller interface 413 communicating with the centralized controller 300, an X2 interface 427 communicating with other base stations for coordinated services, a channel state information module 425, a joint precoding module 426, and a channel estimation unit 420.

Among them, the multi base station service & control unit 414 controls the coordinated multi-base station service based on the cluster information related to the relevant base station. Assume that the joint codebook of the relevant cluster is already stored in the cluster information.

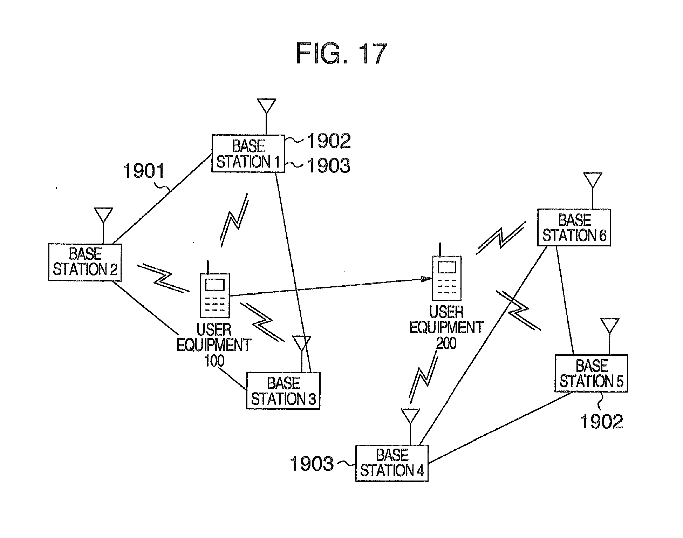

When the centralized control multi base station service framework shown in FIG 3 is employed, the centralized controller interface 413 is turned on to communicate with the centralized controller 300. Moreover, the present invention can also employ a distribution type coordinated multi-base station serving system framework shown in FIG 17 described later, and when the distribution type coordinated multi-base station serving framework is employed, the centralized controller interface 413 is turned off and X2 is turned on to communicate with the other base stations within the cluster.

The channel state information module 425, when the relevant base station is set to the serving base station, stores the channel state information reported from a corresponding user equipment and transfers this channel state information to the centralized controller 300 via the centralized controller interface 413.

The high frequency module 424 comprises at least two physical antennas 401 and 402, a multiplexing unit 403, and a radio frequency unit 404. The downlink portion of the high frequency module 424 includes a joint precoding module 426, at least two downlink pilot generation units 407 and 408, a layer mapping unit 409, a common pilot generation unit 406, at least two downlink time division control units 421, and a transmission radio frequency control & multi-antenna control unit 411. The uplink portion of the high frequency module 424 includes a coordinated service decoding unit 423, at least two uplink training sequence analysis units 417 and 418, a layer demapping unit 419, and at least two uplink time division control units 422. A baseband part includes at least two channel-coding modulation modules 416 and at least two channel decoding demodulation modules 415.

Since the joint codebook shared by a plurality of base stations within a cluster is used, the first embodiment according to the present invention is characterized in that the portions directly related to the present invention in the base station are the centralized controller interface 413, the multi base station service & control unit 414, and the channel state information module 425. The format related to the cluster information and channel state information will be described later in detail. Since other modules mainly relate to the coordinated multi-base station service and the conventional module configuration can be used, the specific description thereof is omitted.

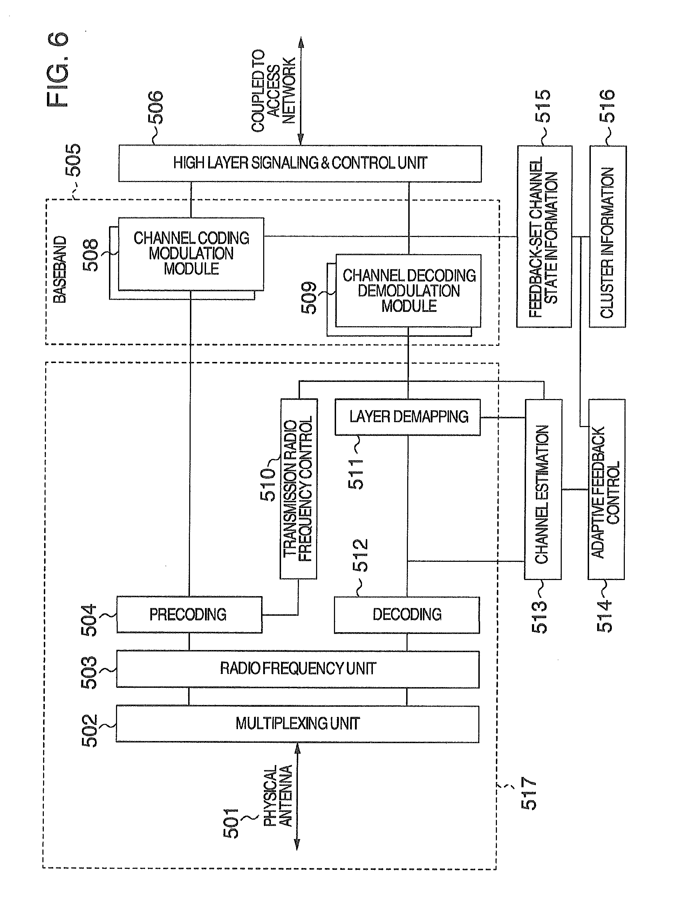

FIG 6 is a schematic view illustrating the internal configuration (with one antenna) of the user equipment in the present invention. The internal configuration of the user equipment 200 comprises a high frequency module 517, a baseband module 505, and a high layer signaling control module 506. The high frequency module 517 includes at least a physical antenna 501, a multiplexing unit 502, and a radio frequency unit 503. The downlink portion of the high frequency module 517 includes a precoding unit 504 and a transmission radio frequency control unit 510. The uplink portion of the high frequency module 517 includes a decoding unit 512 and a layer demapping unit 511. A baseband portion includes a channel coding modulation module 508 and a channel decoding demodulation module 509. Since the conventional module configuration can be used as the user equipment configuration, the specific description thereof is omitted.

Moreover, the user equipment shown in FIG 6 includes a channel estimation unit 513, an adaptive feedback control unit 514, a feedback-set channel state information 515, and a cluster information 516 according to the present invention.

Among them, the channel estimation unit 513 is a unit measuring the channel state information of a user equipment with respect to the base station within the cluster. Since a conventional channel state estimation method can be utilized in the measurement of the channel state, the specific description thereof is omitted.

The feedback-set channel state information 515 and the cluster information 516 correspond to a memory for storing the channel state information of the feedback set and a memory for storing the cluster information, respectively. The joint codebook of the relevant cluster is held in the cluster information 516. Among them, the format related to the cluster information and channel state information will be described later in detail.

In the first embodiment according to the present invention, the user equipment is capable of performing adaptive feedback under the control of the adaptive feedback control unit 514. The adaptive feedback refers to the fact that when a user equipment feeds back the channel state between the user equipment and a base stations within a cluster, firstly optimization with respect to a combination of the coordinated services of all the base stations within the cluster is performed, and the base stations less contributing to the signal to noise ratio are removed, so that the optimum combination of base stations within the cluster is added to the feedback message as the feedback set. The specific feedback method will be described later in detail.

Moreover, the adaptive feedback control unit 514 tailors the joint codebook based on the feedback set, and selects the channel state information of |F| (the number of base stations in the feedback set) cells from the tailored joint codebook. Since the same phase reference system is used in the joint quantization, the phase difference information between cells is already included in the joint selection process. The user equipment feeds back to the serving base station an identifier corresponding to the channel state information of |F| cells of after the quantization. The relevant identifier is further transferred from the serving base station to the centralized controller, and the centralized controller determines the coordinated transmission method of the next step. The specific tailoring method will be described later.

In the first embodiment, the adaptive feedback of a user equipment is performed by the adaptive feedback control unit 514, however without tailoring the joint codebook, the identifiers of the channel state information of all the base stations within the cluster may be fed back using a basic joint codebook. In this case, the user equipment includes a control unit substituting for the adaptive feedback control unit 514.

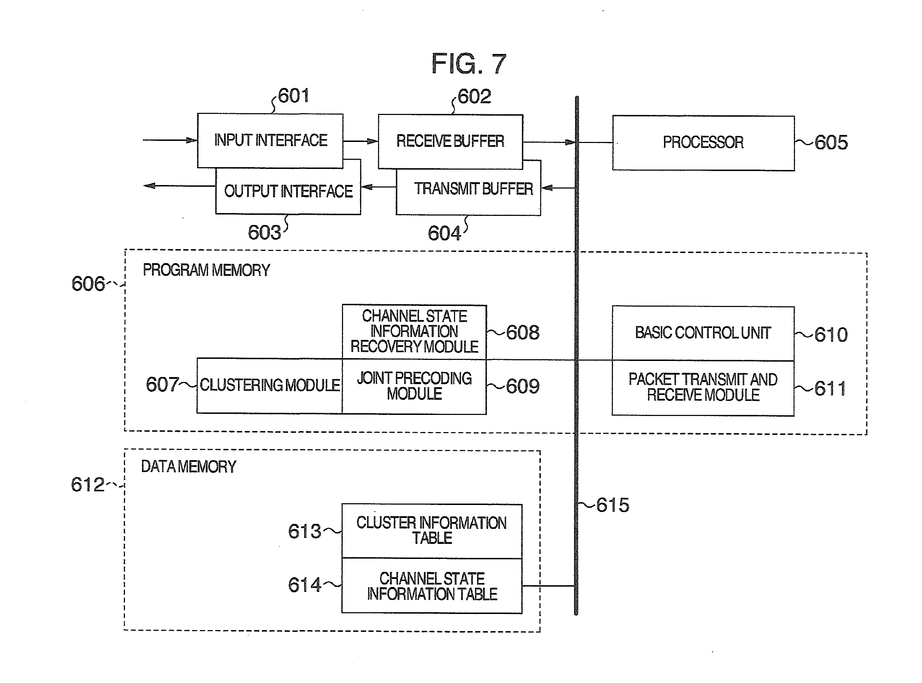

FIG 7 is a schematic view illustrating the internal configuration of the centralized controller 300 in the present invention. In FIG 7, the network interface of the centralized controller 300 includes an input interface 601 and an output interface 603. The network interface further includes a receive buffer 602 and a transmit buffer 604, wherein one input interface 601 and one internal bus 615 are coupled to each receive buffer, and one output interface 603 and one internal bus 615 are coupled to each transmit buffer. At least a processor 605, a program memory 606, and a data memory 611 are coupled to the internal bus 615. Functional modules which the processor 605 executes are stored in the program memory 606. The functional modules include a clustering module 607, a channel state information recovery module 608, and a joint precoding module 609.

Among them, the clustering module 607 can control the clustering of base stations in a static or dynamic method. If the base stations are already divided into clusters in a static clustering manner, the clustering module 607 can be omitted.

The channel state information recovery module 608 recovers the channel state information transferred by each base station.

The joint precoding module 609 mainly determines the multi-base station joint precoding method and controls the resource allocation.

The program memory 606 further includes a packet transmit and receive module 611 and a basic control unit 610, wherein the basic control unit 610 is used to select and start other module. A cluster information table 612 and a channel state information table 613 in the present invention are stored in the data memory 612.

As described above, in the present invention, the channel state information recovery module 608 is introduced and the operations of the channel state information recovery module 608 are as follows. (1) Receive the feedback (channel state information) of a user equipment transferred from the base station 1. (2) Recover the channel state information. (3) Update the channel state information table 613 using the recovered channel state information.

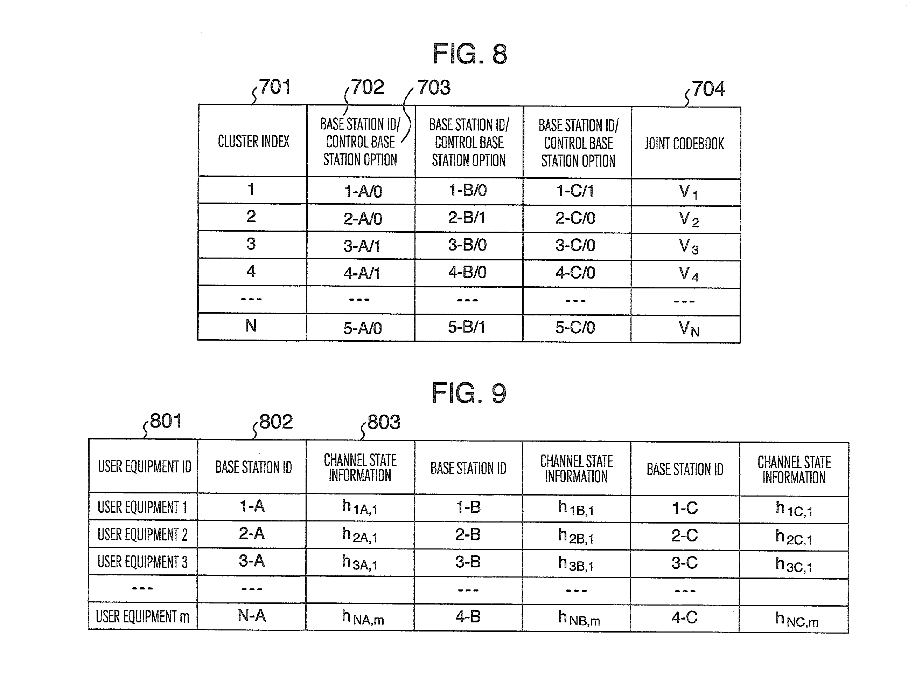

Moreover, in the present invention, a cluster information table 613 is stored in the data memory 612. FIG 8 is an exemplary view of the cluster information table in the present invention. As shown in FIG 8, the clustering results are stored in the cluster information table 613. When a user equipment moves into one new cluster, the centralized controller 300 transmits the information of this cluster to the serving base station, and this cluster information is further transferred from the serving base station to the user equipment and stored therein.

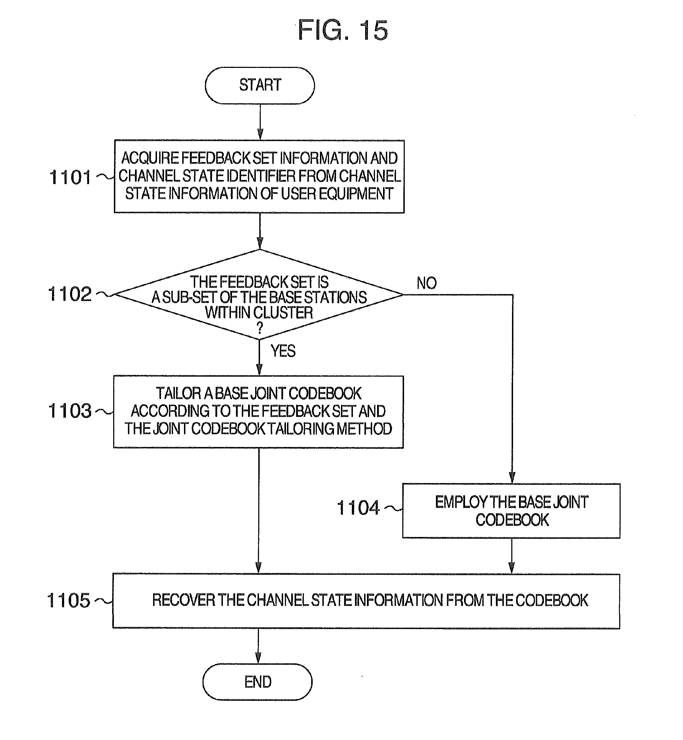

FIG 8 is one example of the cluster information table 613 according to the present invention. In FIG 8, each row corresponds to the information of one cluster 301. This information includes a cluster index 701, a base station ID 702/control base station option 703 of each base station included in the cluster, and a joint codebook 704 shared by all the base stations of the cluster. The joint codebook will be described later in detail with reference to FIG 15.

Here, the control base station option 703 designates the control base station controlling the coordinated multi-base station service. When the system employs the centralized control framework shown in FIG 2, there is no control base station option 703. When the system employs the distribution type framework, the control base station option 703 is required. When the value of the control base station option 703 is 1, it is indicated that the relevant base station is the control base station of this cluster, while when the value is 0, it is indicated that the relevant base station is not the control base station of this cluster.

In the present invention, a channel state information table 614 is further stored in the data memory 611. Upon receipt of the feedback of a user equipment transferred from each base station, the channel state information recovery module 608 updates the relevant table. In the coordinated service, the joint precoding module 609 determines the joint precoding method with reference to the content in the channel state information table 614. That is, the latest channel state information table 614 is used for determining the joint precoding method. However, since the specific process to determine the joint precoding method has nothing to do with the present invention and the prior art can be referred, the detailed description thereof is omitted.

Moreover, the cluster information in the base station and the cluster information in the user equipment are portions related to the corresponding base station and user equipment in the cluster information table 163.

FIG 9 is an exemplary view of the channel state information table in the present invention. As shown in FIG 9, each row in the channel state information table 614 corresponds to the channel state information reported from one user equipment. This row includes a user equipment ID 801, a base station ID of each base station within a cluster to which the user equipment ID 801 belongs, the base station ID being designated by the user equipment, and the corresponding channel state information. After the channel state information recovery module 608 recovers the result, which is fed back by a user equipment based on the joint codebook, into an actual channel state information value, the result after the recovery is stored into the channel state information table 614.

When the user equipment performs the adaptive feedback, this result is stored according to the feedback set. If a certain base station is not contained in the feedback set, the channel state information value corresponding to this base station, which has not been fed back, is set to 0.

Moreover, the channel state information in the base station and the user equipment are portions corresponding to the corresponding base station and user equipment in the channel state information table 164.

Hereinafter, the configuration of the joint codebook 703 is described.

The joint codebook 703 is a set of distributions of all the channel states in which all the base stations within a cluster are integrally included. A possible combination of the channel states within a cluster is expressed with a predetermined accuracy.

For example, when a distribution of the relevant channel states is expressed using a joint codebook of a two-dimensional matrix, if the number of feedback bits of one cluster is designated by B, then the number of rows of the joint codebook of this cluster is $2^B$, and a normalized quantization vector of $|C|*N_t$ dimensions is included. Where $|C|$ is the size of the cluster, i.e., the number of base stations included within one cluster, and $N_t$ is the number of antennas included in the base station. Each vector $v \in V$ can be expressed as Formula 2.

$$\mathbf{v} = \frac{v_R + iv_I}{\left\| v_R + iv_I \right\|} \qquad (2)$$

In Formula 2, each element of $v_R$ and $v_I$ follows a normal distribution. Accordingly, a vector distribution calculated by Formula 2 can be used as the code word of the joint codebook, and the distribution of channel states can be expressed in a matrix.

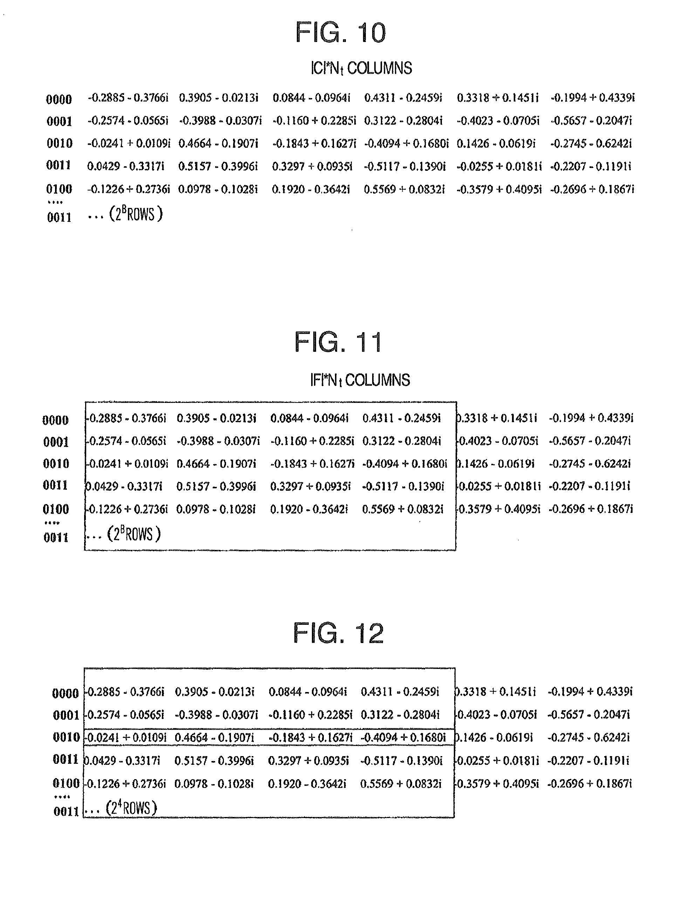

FIG 10 is an exemplary view of the joint codebook 703 included in the cluster information table. In FIG 10, |C| =3, i.e., three base stations are included within a cluster. $N_t$=2 indicates that two antennas are included in each base station. In this case, the number of dimensions of the codebook is 6.

The joint codebook according to the present invention may be configured using other method. For example, the joint codebook may be configured using a method of directly quantizing without using normalization or a method of calculating the code word using elements of other normal distribution. All the methods of distributing possible channel state information based on a predetermined accuracy can be applied to the present invention. The joint codebook is not limited to the two-dimensional matrix, but may be a three or more dimensional matrix.

Hereinafter, the Coordinated Multi-Point transmission/reception process using the joint codebook in the present invention is described based on the configuration of the system.

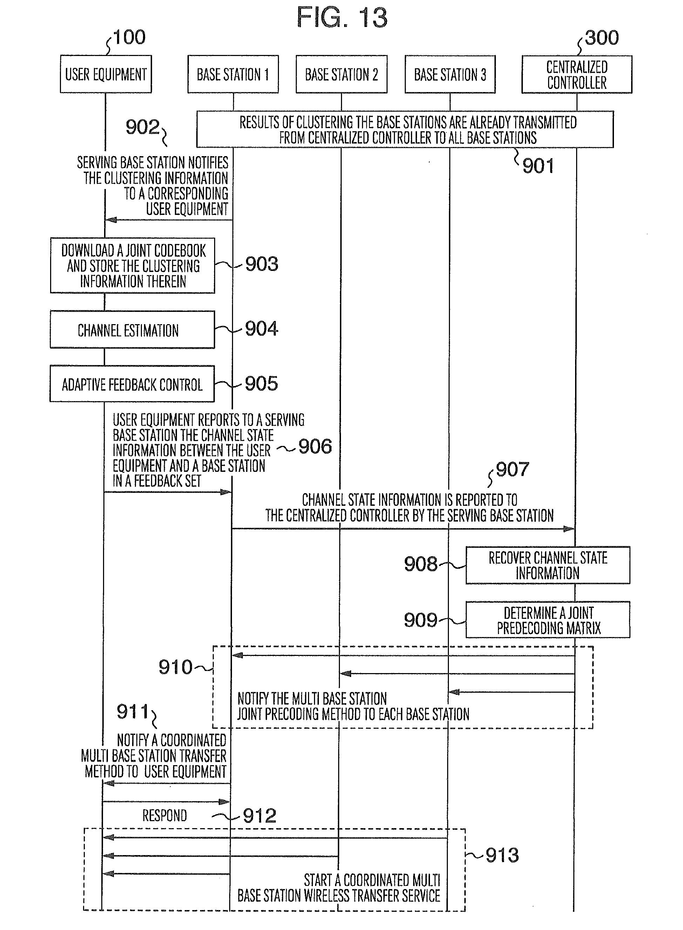

FIG 13 is a signal flow chart when the user equipment 100 within a cluster performs the adaptive feedback. In FIG 13, there are a total of three base stations within the cluster to which the user equipment 100 belongs. Among them, the base station 1 is the serving base station of the user equipment 100.

First, after the clustering module of the centralized controller 300 performs clustering, the information belonging to a certain cluster in the cluster information table is s notified to all the base stations 1 to 3 within this cluster, respectively (Step 901). The serving base station 1 having received this cluster information notifies this cluster information to the user equipment 100 within the cluster (Step 902).

Subsequently, the user equipment 100 downloads the joint codebook belonging to this cluster from the cluster information, and stores the cluster information into the cluster information 516 shown in FIG 6 (Step 903).

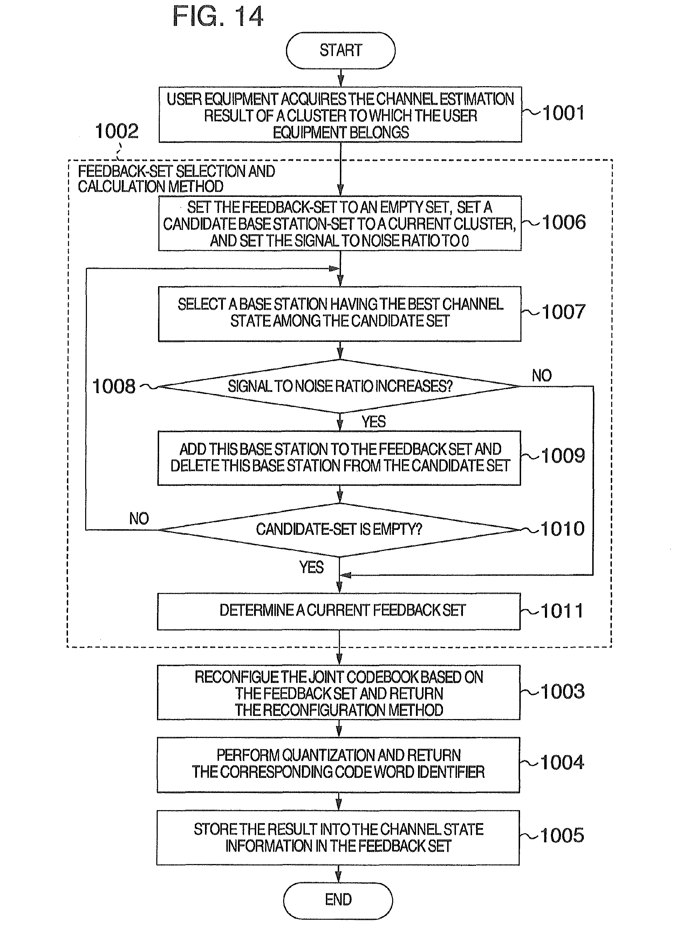

Subsequently, the user equipment 100 measures the pilot information of the current cluster, and performs channel estimation by means of the channel estimation unit 513 (Step 904). The channel estimation unit 513 transmits the estimated channel state information to the adaptive feedback control unit 514. The adaptive feedback control unit 514 of the user equipment 100, based on an adaptive feedback method shown in the FIG 14 described later, determines an identifier corresponding to a feedback set and the channel state information related to the feedback set in the joint codebook shown in FIG 10 (Step 905).

Subsequently, the user equipment 100 adds the identifier corresponding to the channel state information obtained in Step 905 to a feedback message, and feeds back the resulting message to the serving base station 1 (Step 906). The serving base station 1 transfers the feedback message obtained in Step 906 to the centralized controller 300 (Step 907).

The channel state information recovery module 608 in the centralized controller 300, with the use of a channel state information recovery method shown in the FIG 15 described later, based on the identifier in the feedback message, recovers the channel state information of the user equipment 100 from the currently held joint codebook corresponding to the cluster, to which the user equipment 100 currently belongs, and updates the channel state information table 613 (Step 908).

The joint precoding module 609 in the centralized controller 300 determines the joint precoding method comprehensively referring to the channel state information of each base station within this cluster (Step 909). Then, the centralized controller 300 notifies a multi-base station joint precoding method to each base station within the cluster (Step 910). The serving base station 1 having received this multi-base station joint precoding method notifies the multi-base station joint precoding method to the user equipment 100 (Step 911). The user equipment 100 supports this method and responds (Step 912). Then, a plurality of base stations 1 to 3 within the cluster performs the coordinated wireless transmission service on the user equipment 100 (Step 913).

FIG 14 is a flow chart of the adaptive feedback method performed by the user equipment 100 in the present invention.

In Step 1001, the adaptive feedback control unit 514 of the user equipment 100 acquires channel state information $H_k=[h_{1,k}, h_{2,k}, h_{3,k}]$ of each base station within the relevant cluster from the channel estimation unit 513. This channel state information may be expressed as Formula 3.

$$H_k = \left[ l_1 \widetilde{h}_{1,k}, l_2 \widetilde{h}_{2,k}, l_3 \widetilde{h}_{3,k} \right] \qquad (3)$$

In Formula 3, $1_x$ is the channel gain from a base station x to a user equipment, and $h_{x,k}$ is a channel vector after normalization.

Subsequently, the adaptive feedback control unit 514 prepares a feedback set based on the channel states with respect to the user equipment 100 of a plurality of base stations within the cluster. Step 1002 shows an example of the method of selecting and calculating the feedback set. This calculation method includes the following steps.

First, in Step 1006, the feedback set is set to an empty set, and a candidate set is set to the candidate set of the base stations (all the base stations within the cluster) extracted from the cluster information 516, and the current signal to noise ratio is set to 0.

Subsequently, in Step 1007, a base station having the best channel state from this base station to the user equipment 100 is selected based on Formula 4 below.

$$x^* = \arg\max_{x \in L} \left\| h_{x,k} \right\|^2 \qquad (4)$$

In Formula 4, L represents a candidate base station set, x represents a base station in the candidate set, and k represents a user equipment.

Subsequently, in Step 1008, the signal to noise ratio when the feedback set includes a selected base station is calculated based on Formula 5 below.

$$\arg\max \frac{\sum_{x \in F} l_x^2}{\left(\sigma_n^2 + I_{out}^2\right)/P + \sum_{j \notin F} l_x^2 + 2^{-B/\left(|F||N_t|-1\right)} \sum_{x \in F} l_x^2} \qquad (5)$$

In Formula 5, $1_x$ is the channel gain from the base station x to the user equipment, F represents the current feedback set, $\sigma_n$ represents white noise, $I_{out}$ represents the interference from other clusters, P is the maximum transmission power of the base station, B is the maximum number of feedback bits within one cluster, and $N_t$ is the number of antennas of the base station.

If the signal to noise ratio at this time is larger than the original one, then Step 1009 is executed, and otherwise Step 1011 is executed.

In Step 1009, the selected base station is added to the feedback set, and at the same time this base station is eliminated from the candidate set.

In Step 1010, if the candidate set is empty, Step 1011 is executed, and otherwise Step 1007 is re-executed.

In Step 1011, the current feedback set is set to the final feedback set, and the flow further proceeds to Step 1003.

In Step 1003, the joint codebook is tailored based on the feedback set, and the joint codebook is tailored into a size capable of accommodating the base stations in the feedback set. The codebook tailoring method is returned (when the codebook tailoring method is not determined in advance).

Then, in Step 1004, the channel state information in the feedback set is quantized, and the identifier corresponding to the code word is returned. The specific tailoring and quantizing processes will be described later in detail.

Finally, in Step 1005, the result is stored into the channel state information 515 in the feedback set.

Hereinafter, the method of tailoring the codebook is described in detail.

When |F| is the number of base stations of the feedback set, the tailored joint codebook used in quantization of the channel state includes |F|*$N_t$ dimensions. For this reason, the codebook matching the number of base stations in the feedback set needs to be tailored from the joint codebook so as to be used in recovering the channel state. There are various kinds of tailoring methods. For example, the tailoring may directly performed from the first dimension to the

|F|*N$_t$-th dimension, or the |F|*N$_t$ dimensions may be selected from the joint codebook of |C|*N$_t$ dimensions according to the position corresponding to the selected base station and be set to the tailored joint codebook. Moreover, the |F|*N$_t$ dimensions may be randomly selected and set to the tailored joint codebook.

FIG 11 is an exemplary view when the joint codebook is tailored in the present invention. As shown in FIG 11, when with respect to the joint codebook shown in FIG 10, a joint codebook having the first dimension to the |F|*N$_t$-th dimension and having a fixed number of rows is tailored, the tailored joint codebook of the portion within the solid line frame shown in FIG 11 is obtained.

Now, the quantization process according to Step 1004 is described. The quantization process here refers to the steps of: based on the channel state information corresponding to a base station contained in the feedback set, finding, from a distribution of channel states in the tailored joint codebook, a portion (one row in the case of a two-dimensional codebook) closest to the channel state information corresponding to the base station contained in the feedback set; and extracting an identifier for determining this portion.

Specifically speaking, when the feedback set is equal to the cluster (|F|=|C|) (i.e., when the user equipment has not performed the adaptive feedback and tailoring), the quantization is performed directly using the codebook.

When the feedback set is a sub-set of the cluster (|F|<|C|) (i.e., when the user equipment has performed the adaptive feedback and tailoring), the quantization is performed using the tailored base codebook. The |F|*N$_t$ vectors included in the feedback set can be expressed as Formula 6.

$$h_k^F = \left[ h_k^{x_1}, h_k^{x_2}, h_k^{x_3} \right] \qquad (6)$$

The steps of quantizing the channel state information are as follows.

Step 1: the channel state information of the feedback set is firstly normalized using Formula 7.

$$\widetilde{h}_k^F = h_k^F / \left\| h_k^F \right\| \qquad (7)$$

Step 2: according to the law (Formula 8) of the minimum Euclidean distance or the like, a vector v* closest to $\widetilde{h}_k^F$ is selected from the tailored joint codebook and is used as the vector $\hat{h}_k^F$ of after the quantization.

$$\hat{h}_k^F = \arg\max \left\| \hat{h}_k^F v^* \right\| \qquad (8)$$

Step 3: finally, the identifier for B bits corresponding to this vector is returned.

FIG 12 is an exemplary view when the feedback-set channel state information is quantized. In this example, assume that there are three base stations within a cluster and that among them, two base stations belong to the feedback set. That is, |F|=2, and the feedback set is a sub-set of the cluster. For this reason, as shown in FIG 11, the tailored codebook is selected. If B=4, the size of this codebook is 16. According to the above-described method, a vector closest to the normalized channel state information is searched from the tailored joint codebook. When it is determined that a vector within the framework corresponding to an identifier "0010" is closest to the actual channel state information of a base station in the feedback set, the identifier "0010" corresponding to this vector is returned.

Next, based on a flow chart shown in FIG 15, the channel state information recovery method in the centralized controller after receiving the identifier from a user equipment is described. FIG 15 is a flow chart of the method of recovering the channel state information performed by the centralized controller 300.

First, in Step 1101, the centralized controller 300 acquires the feedback set and the identifier from the feedback set information 1308 in the feedback message of a user equipment transferred by the serving base station.

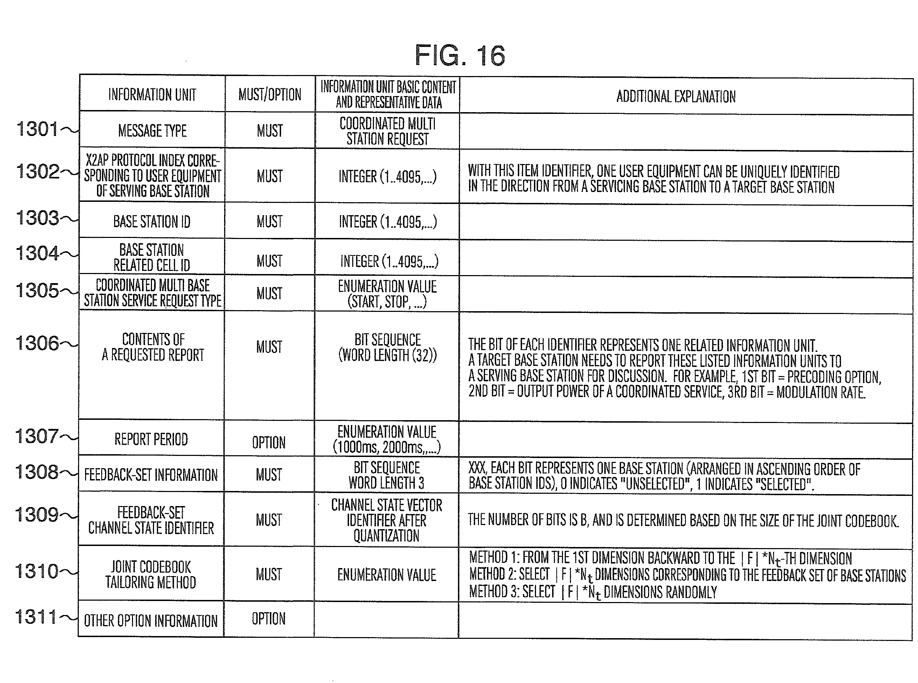

With regard to the format of the feedback message, the basic format of the feedback message of a user equipment transferred from a base station is shown in FIG 16. In FIG 16, the feedback message is expressed as a comprehensive information table, wherein each item accompanies its evaluation and specific description. The items contained in this table are as the follows. (1) Message type 1301: the value of this item is defined by the standardization organization, such as 3GPP, and needs to be able to identify a coordinated multi-base station request function. (2) X2AP protocol index 1302 corresponding to a user equipment of a serving base station: with this item identifier, one user equipment can be uniquely identified in the direction from a serving base station to a target base station. (3) Base station identifier 1303: this item is used to determine a base station. (4) Base station related cell identifier 1304: this item is used to determine a related cell. (5) Coordinated multi-base station service request type 1305: this item is "start", "end", and so on. (6) Requested report content 1306: this item is a 32-bit sequence, each bit corresponds to one information content, and when the numerical value of a certain bit is 1, it is indicated that a target base station needs to add corresponding information to a response message. For example, the first bit corresponds to a precoding option, the second bit corresponds to the output power of a coordinated service, and the third bit corresponds to a modulation rate, and so on. (7) Report period 1307. (8) Feedback set information 1308: there are |C| bits, each bit represents one base station within the current cluster, 0 indicates that this base station has not been selected as the feedback set, and 1 indicates that this base station has been selected as the feedback set. (9) Channel state identifier of a feedback set 1309: this item is an identifier corresponding to a vector in the joint codebook which is returned after a user equipment performed quantization on the channel state information of a feedback set. (10) Joint codebook tailoring method: there are various kinds of joint codebook tailoring methods, which have already been described in FIG 11. A user equipment notifies the employed method to a base station, and the base station further transfers this method to the centralized controller through the "joint codebook tailoring method" 1310 in the message of FIG 16. (11) Other option information 1311.

Among them, the feedback set information 1308, the feedback-set channel state identifier 1309, and the joint codebook tailoring method 1310 (the shadow portions of FIG 16) relate to the present invention. Moreover, this feedback message table may be expressed in other form, and the contents thereof are not limited to those in the example shown in FIG 16.

As described above, with regard to the feedback set information 1308 shown in FIG 16, each bit in |C| bits indicates the selection state of one base station within one cluster. All the base stations are arranged in the ascending order of base station IDs. "1" indicates that this base station has been selected as the feedback set, and "0" indicates that this base station has not been selected as the feedback set. For example, supposing that there are three base stations in one cluster and the base station IDs are 20, 50, and 80, respectively, then 010 indicates that the feedback set is {50}, and 101 indicates that the feedback set is {20, 80}. From the feedback-set channel state identifier 1309, the identifier of the channel state information of each base station in the feedback set and the identifier of the channel state information of a user equipment are obtained.

Returning to FIG 15, after the centralized controller 300 acquires a specific base station (which can be confirmed by the base station identifier) in the feedback set from the feedback set information 1308, in Step 1102 if the feedback set is a sub-set of the base stations within the cluster, then Step 1103 is executed, and otherwise Step 1104 is executed.

In Step 1103, the joint codebook is tailored according to the feedback set information 1308 and the joint codebook tailoring method 1310.

In Step 1004, the joint codebook is directly employed without tailoring.

Subsequently, in Step 1105, based on the feedback-set channel state identifier obtained in Step 1101, the corresponding channel state information vector is searched from the codebook, and its result is stored into the channel state information table 614.

As described above, in the first embodiment according to the present invention, the coordinated service framework, which is controlled by the centralized controller shown in FIG 4, has been described as an example, which reveals the followings. In the present invention, both the centralized controller 300 and the user equipment in a cluster hold the same joint codebook, and the user equipment, based on the same joint codebook and with a cluster as the unit, performs the joint quantization on the channel state information within the relevant cluster. For this reason, in the situation where the feedback channel capacity of a user equipment is limited, the utilization efficiency of the feedback channel capacity can be improved. Moreover, since in the joint quantization, the same phase reference system is used, the phase difference information between cells already appears in the joint selection process and the throughput can be further reduced.

Moreover, since a user equipment can also perform the adaptive feedback in feeding back channel state information, there is no need to select a base station corresponding to each channel state within a cluster based on this channel state and feed back the channel state information of a bad channel state to a serving base station. For this reason, the effectiveness of feedback can be increased and the throughput can be further reduced.

[Example 2]

In a second embodiment according to the present invention, the coordinated serving system employs a method of feeding back a channel state in a multi-distribution type (not a centralized control type) coordinated multi-base station serving system framework.

FIG 17 is a schematic view illustrating the distribution-type coordinated multi-base station serving system framework. In the present invention, the LTE-Advanced network established by the 3GPP standardization organization is taken as an application example. The facility and method according to the present invention can be applied to the mobile networks supporting other coordinated multi-base station services. In this representative framework, a mobile cellular network comprises at least a plurality of base stations. The basic configuration of each base station is as shown in FIG 5. Assuming that the base stations are already divided into clusters by the method of FIG 3, then the base stations belonging to one cluster are coupled to each other via a X2 interface 1901. When the framework of FIG 17 is employed, the centralized controller interface 413 shown in FIG 5 is turned off.

Moreover, since the distribution type is employed, there is one control base station 1902 within each cluster (e.g., the control base station 1902 within the cluster comprising base stations 4 to 6 is the base station 5), and the control base station discusses key parameters of the coordinated multi-base station service with the other base stations belonging to this cluster and makes a judgment. For this reason, the internal configuration of this control base station further includes the configuration of the centralized controller 300 shown in FIG 3 as the control module.

Within a certain cluster, a serving base station 1903 of a user equipment may be the control base station 1902 (e.g., the control base station 1902 of the cluster comprising the base stations 1 to 3 is also the serving base station 1903 of the user equipment 100), or the control base station and the serving base station of a certain user equipment may be different base stations. For example, within the cluster comprising base stations 4 to 6, the control base station 1902 within the cluster is the base station 5 while the serving base station 1903 of the user equipment 200 is the base station 4.

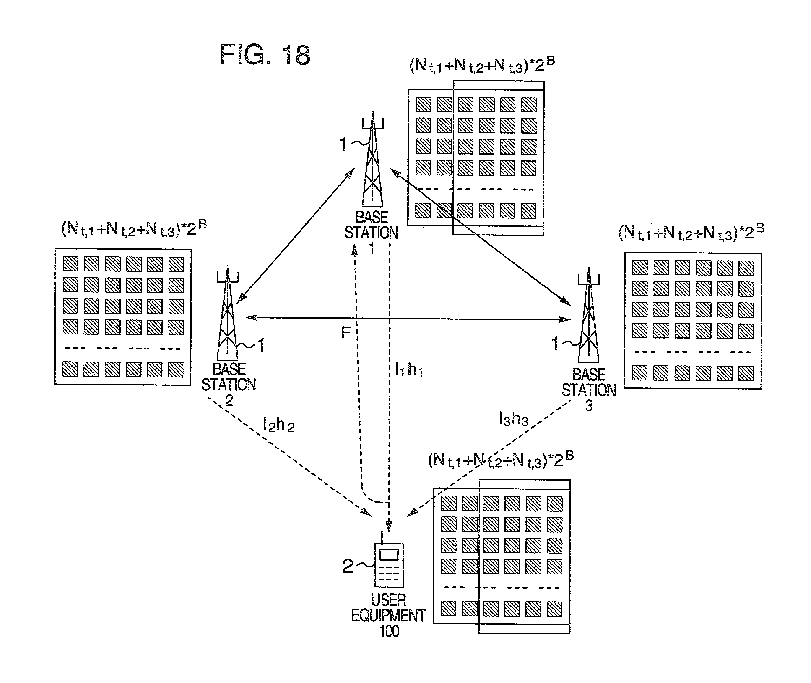

In the second embodiment according to the present invention, assuming that the serving base station 1903 of a user equipment is exactly the control base station of this cluster, then the user equipment feeds back based on a method shown in the FIG 18 described later.

Since the other portions of the second embodiment are the same as those of the first embodiment, the specific description thereof is omitted. Moreover, the same portion as the first embodiment is represented by the same reference numeral.

FIG 18 is a schematic view when a coordinated multi-base station service is fed back based on the distributed-type in the present invention. Three base stations constitute one cluster and jointly perform the coordinated transmission service for a user equipment (assume that the user equipment has a single antenna). The serving base station of the user equipment 100 is assumed to be the base station 1. Moreover, the base station 1 is also the control base station within this cluster.

As shown in FIG 18, in the distribution-type coordinated multi-base station serving system framework, there is no centralized controller and each base station of the cluster holds the joint codebook of this cluster.

The channel state information which the user equipment 100 received is $h=[1_1h_1^H, 1_2h_2^H, 1_3h_3^H]$, where I is width information and h is a channel direction indicator. The joint codebook information of this cluster is already stored in each base station after the network is clustered.

As described above, the joint codebook is a codebook shared by the base stations belonging to the identical cluster.

For this reason, in the joint codebook of this cluster, the number of dimensions is a total of the numbers of antennas of the respective base stations, and is $N_{t,1}+N_{t,2}+N_{t,3}$ in this s example. The size of the codebook is $2^B$, where B is the number of feedback bits specified by the system.

In the second embodiment, as with the first embodiment, the user equipment 100 performs the adaptive feedback according to the method shown in FIG 14 and performs the joint quantization using the tailored codebook (as shown in FIG 11). That is, the channel state information of $|F|$ base stations is selected from the codebook. The specific quantization is as shown in FIG 12. Since the same phase reference system is used in the quantization, the phase difference information between base stations is already included in the joint selection process.

Moreover, the user equipment 100 feeds back to a serving base station an identifier in the joint codebook corresponding to the channel state information of $|F|$ cells of after the quantization. The serving base station determines the coordinated transmission method of the next step.

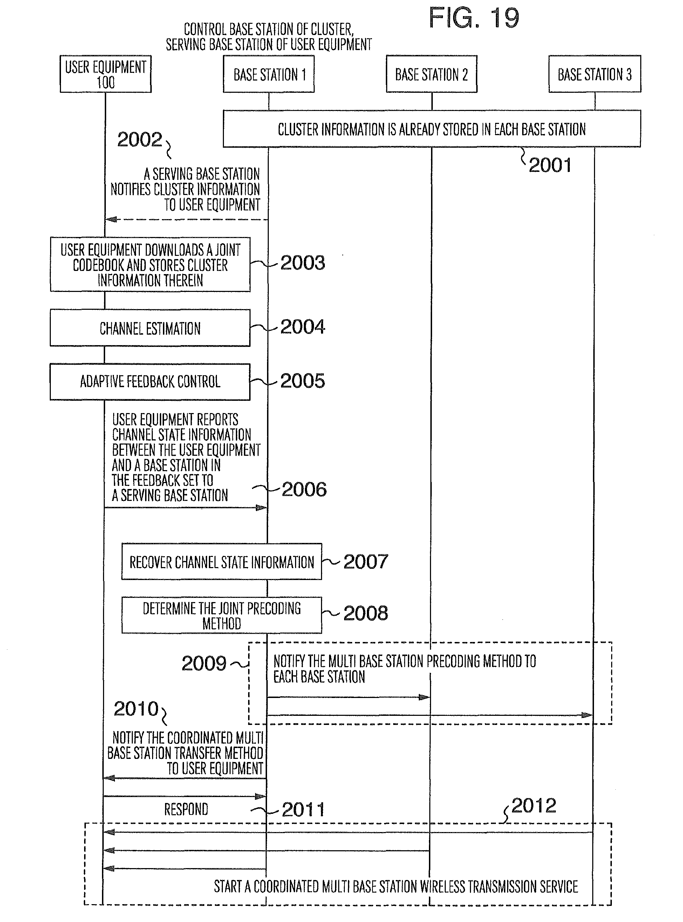

FIG 19 is a signal flow chart when the adaptive feedback is performed based on the distributed type in the present invention. In FIG 19, suppose that in the current cluster, the control base station of the cluster is the serving base station of a user equipment. As shown in the view, the base station 1 is the control base station of the cluster and is also the serving base station of the user equipment 100.

First, in the distribution type coordinated serving system, the cluster information is already stored in each base station (Step 2101). Subsequently, the serving base station 1 of the user equipment 100 notifies the cluster information to the user equipment 100 (Step 2002).

In the distribution type system, the user equipment 100 downloads the joint codebook within the cluster, to which the user equipment 100 belongs, from the network via a wireless interface, and stores cluster information into its cluster information storage area (Step 2003).

Subsequently, the user equipment 100 performs the channel estimation (Step 2004), and the channel estimation unit 513 transmits the estimated channel state information to the adaptive feedback control unit 514.

The adaptive feedback control unit 514 of the user equipment 100 performs the adaptive feedback, and determines the feedback set and the identifier in the codebook of the corresponding channel state information based on the method shown in FIG 14 (Step 2005).

The user equipment 100 adds the identifier and feedback set obtained in Step 2005 to the feedback message, and then feeds back the resulting message to the serving base station (base station 1) (Step 2006).

The channel state information module 425 of the serving base station (i.e., control base station) recovers the channel state information belonging to a certain user equipment according to the method shown in FIG 15, and stores this information into the channel state information module 425 (Step 2007).

The joint precoding module in the serving base station (base station 1) puts together the channel state information of the respective base stations, and determines the joint precoding method (Step 2008). The multi-base station joint precoding method is notified to the other base stations (base station 2 and base station 3) of this cluster via the X2 interface (Step 2009). Moreover, the serving base station (base station 1) notifies the multi-base station joint precoding method to the user equipment 100 (Step 2010).

The user equipment 100 having received the joint precoding method supports this method and responds (Step 2011). Then, a plurality of base stations start the coordinated wireless transmission service with respect to the user equipment 100 (Step 2012).

In the second embodiment, with the cluster as the unit, the coordinated service is controlled in the relevant cluster. Since the control base station and the serving base station within the cluster are the identical base station, the user equipment within the cluster does not need to transfer the feedback message to the control base station or the centralized controller via the serving base station, but can directly transfer the feedback message to the serving base station, so that the transmission process can be simplified.

[Example 3]

In the second embodiment, the serving base station and control base station of a user equipment within a cluster can be different base stations. In this case, the user equipment feeds back according to a method shown in FIG 19.

Since the other portions of a third embodiment are the same as those of the second embodiment, the specific description thereof is omitted. Moreover, the same portion as the second embodiment is represented by the same reference numeral.

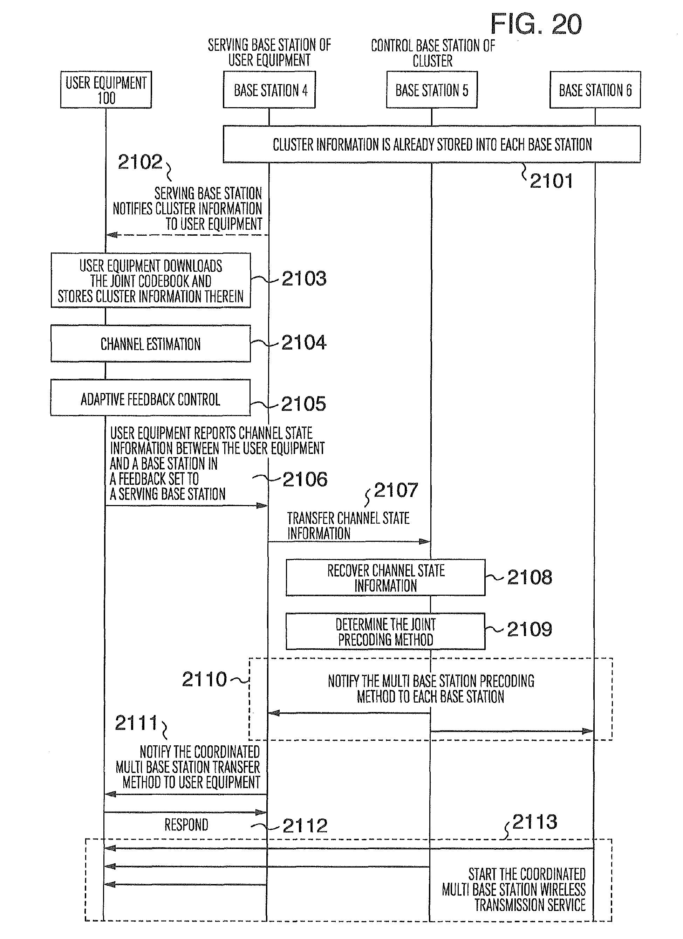

FIG 20 is another signal flow chart when the adaptive feedback is performed based on the distributed-type in the present invention (the control base station of a cluster differs from the serving base station of a user equipment). As shown in FIG 20, the base station 5 is the control base station of a cluster, and the base station 4 is the serving base station of the user equipment 100. That is, within the cluster comprising the base stations 4, 5, and 6, the control base station is not the serving base station of the user equipment.

As shown in FIG 20, first, the cluster information is already stored in each base station (Step 2001), and the serving base station 1 of the user equipment 100 notifies cluster information to the user equipment 100 (Step 2102).

The user equipment 100 downloads the joint codebook and stores the cluster information therein (Step 2103).

Subsequently, the user equipment performs the channel estimation (Step 2104), and the channel estimation unit 513 transmits the estimated channel state information to the adaptive feedback control unit 514.

The adaptive feedback control unit 514 of the user equipment 100 performs the adaptive feedback, and determines a feedback set and an identifier of the joint codebook of the corresponding channel state information according to the method shown in FIG 14 (Step 2105).

The user equipment 100 adds the identifier and feedback set obtained in Step 2105 to the feedback message, and then feeds back the resulting message to the serving base station (base station 4) (Step 2006). The serving base station (base station 4) transfers the received feedback message of the user equipment to the control base station (base station 5)

(Step 2107).

The channel state information module 425 of the control base station (base station 5) recovers the channel state information belonging to a certain user equipment according to the method shown in FIG 15, and stores this information into the channel state information module 425 shown in FIG 5 (Step 2108).

The joint precoding module in the control base station (base station 5) puts together the channel state information of the respective base stations, and determines a joint precoding method (Step 2109). The control base station (base station 5) notifies the multi-base station joint precoding method to the other base stations (base station 4 and base station 6) of the relevant cluster via the X2 interface (Step 2110). The serving base station (base station 4) notifies the multi-base station joint precoding method to the user equipment 100 (Step 2111).

The user equipment 100 having received the joint precoding method supports this method and responds (Step 2112). Then, a plurality of base stations start the coordinated wireless transmission service with respect to the user equipment 100 (Step 2113).

In the third embodiment, since the control base station within the cluster in the distribution type coordinated service framework and the serving base station of the user equipment are different base stations, the feedback message will be transferred to the control base station within the cluster by the serving base station.

[Other examples]

In the above-described first embodiment to third embodiment, the user equipment 100 includes the adaptive feedback control unit 514, and performs the adaptive feedback using the relevant module before transmitting the feedback set, and with the base stations having a good channel state (here, expressed in the signal to noise ratio) between the respective base stations and the user equipment 110 as the feedback set, the user equipment 100 tailors the joint codebook according to the feedback set. However, the adaptive feedback may not be performed if the joint codebook is acquired and the feedback process is performed directly using the joint codebook. In this case, the adaptive feedback control unit 514 is omitted in the user equipment 100.

In the adaptive feedback of a user equipment, with regard to the criterion of the channel state level, the channel state level is determined by the signal to noise ratio, which is commonly used today, and this signal to noise ratio is used as the criterion for selecting a base station of the feedback set. However, the present invention is not limited thereto, and all methods are within the scope of the protection of the present invention, wherein the other indicator capable of evaluating the channel state is used as the rationale for selecting the feedback set and a base station having a good channel state can be selected from a plurality of base stations within a cluster and put into the feedback set.

With regard to the adaptive feedback of a user equipment, in the inventive scheme of the present invention, all the combinations of the channel states of a plurality of base stations within a cluster are compared with each other to select the optimum combination (e.g., the signal to noise ratio is the maximum) and set this optimum combination to a feedback set. For this reason, the feedback-set selection process is not limited to the process shown in FIG 15, and all the feedback-set selection processes, which those skilled in the art can easily envisage using the above-described inventive scheme, are within the scope of the protection of the present invention.

Moreover, the centralized controller 300 described in the first embodiment may be integrated into a gateway or a server to serve as a part thereof.

According to the present invention, a multi-base station joint codebook is used within a cluster, and in the joint codebook, a plurality of base stations within the cluster is used as a unit so as to represent a distribution of the channel state information of all the base stations within the cluster. Accordingly, only if a user equipment can, based on an actually measured CSI, find an identifier corresponding to this CSI of a distribution of channel states from the joint codebook, the user equipment can feed back the channel state within the cluster, to which the user equipment belongs, just by feeding back the relevant identifier. Therefore, with the limited feedback channel capacity, the accuracy of feedback can be improved and the system performance can be improved.

In the above-described embodiments, when a user equipment performs the adaptive feedback, the joint codebook tailoring method is added to the feedback message and the resulting message is fed back to a control base station or a centralized controller, so that the control base station or the centralized controller can tailor the joint codebook using the same tailoring method and recover the channel state information.

However, the present invention is not limited thereto, and when the calculation method, such as the joint codebook tailoring method, is determined in advance in each facility within a cluster, the control base station or centralized controller which has acquired the feedback message can tailor the joint codebook according to a predetermined tailoring method without adding the tailoring method to the feedback message. Of course, such a modification is also within the scope of the protection of the present invention. The above description has been made with respect to the examples, however, it is apparent to those skilled in the art that the present invention is not limited thereto, and various changes and modifications may be made within the spirit of the present invention and the scope of the appended claims.

**Claims**

1.  A communication control server controlling a communication wherein a coordinated service is performed in a unit of a cluster (301) by a plurality of base stations (1 to 6), the communication control server comprising:

    a network interface (412) coupled to a network and communicating with the base station (1 to 6) through the network;

a memory unit (612) in which a cluster information table (613) and a channel state information table (614) are stored; and

a channel state information recovery unit (608) acquiring a feedback message of a user equipment (100, 200) within the cluster (301) from the base station (1 to 6) via the network interface (412), wherein

the cluster information table (613) holds a cluster identifier (701), a base station identifier (802) for identifying the base station (1 to 6) within the cluster (301), and a joint codebook (704) shared by the base stations (1 to 6) within the cluster (301), wherein

the joint codebook (704) holds an identifier for determining channel state information (803) and a distribution of the channel state information (803), and holds a user equipment identifier (801), the base station identifier (802), and the channel state information (803) associated with each other in the channel state information table (614), and wherein

the feedback message includes an identifier corresponding to the channel state information (803) of the user equipment (100, 200), extracts the channel state information (803) corresponding to the identifier contained in the feedback message from the joint codebook (704), and updates the channel state information table (614) stored in the memory unit (612) using the extracted channel state information (803).

2. The communication control server according to claim 1, wherein the feedback message further includes a feedback set (1308) of the base station identifiers (802), and wherein the channel state information recovery unit (608) tailors the joint codebook (704) based on the feedback set and extracts the channel state information (803) from the tailored joint codebook (704).

3. The communication control server according to claim 1, wherein the feedback message further includes a feedback set (1308) of the base station identifiers (802), and wherein when a number of base station identifiers (802) in the feedback set is smaller than the number of base stations (1 to 6) within the cluster (301), the channel state information recovery unit (608) tailors the joint codebook (704) based on the feedback set and extracts the channel state information (803) from the tailored joint codebook (704).

4. The communication control server according to claim 1, wherein the distribution of the channel state information (803) represents a distribution of a signal strength of a channel and a phase between respective base stations (1 to 6).

5. The communication control server according to claim 1, wherein the distribution of the channel state information (803) is a vector matrix representing the distribution of the channel state information (803).

6. The communication control server according to claim 5, wherein when a number of feedback bits of the cluster (301) is denoted by B, a number of dimensions of the vector matrix is a total of the numbers of all the antennas within the cluster (301), and a number of rows is the B-th power of 2.

7. The communication control server according to claim 1, wherein the channel state information recovery unit (608) acquires the feedback message from the serving base station (1 to 6) within the cluster (301).

8. The communication control server according to claim 1, wherein the communication control server is a gateway.

9. The communication control server according to claim 1, wherein the communication control server is a base station (1 to 6).

10. A user equipment (100, 200) comprising:

a network interface (412) coupled to a network and communicating with a base station (1 to 6) through the network;

a network measurement unit (513) measuring a channel state of a wireless network; and

a control unit (514) controlling so that the network interface (412) receives a joint codebook (704) shared by the base stations (1 to 6) within a cluster (301), wherein

the joint codebook (704) holds an identifier for determining channel state information (803) and a distribution of the channel state information (803), and wherein

the control unit (514) extracts, from the joint codebook (704), an identifier corresponding to the information state (803) detected by the network measurement unit (513), generates a feedback message including the identifier, and transmits the feedback message to the base station (1 to 6) via the network interface (412).

**11.** A base station (1 to 6) comprising:

a network interface (412) coupled to a network and communicating with the base station (1 to 6) through the network;

a memory unit (612) in which cluster information is stored;

a receiving unit (601, 602) acquiring a feedback message from a user equipment (100, 200) within a cluster (301) via the network interface (412); and

a transmit unit (603, 604) transmitting an acquired feedback message to a communication control server via the network interface (412), wherein

the cluster information holds a base station identifier (802) and a joint codebook (704) shared by base stations (1 to 6) of the same cluster (301), wherein

the joint codebook (704) holds an identifier for determining channel state information (803) and a distribution of the channel state information (803), and wherein

the feedback message includes an identifier corresponding to the channel state information (803) of the user equipment (100, 200).

**12.** A coordinated serving system, comprising: the communication control server according to claim 1; the user equipment (100, 200) according to claim 10; and a plurality of base stations (1 to 6) divided into a plurality of clusters (301), the base stations (1 to 6) each holding cluster information (516), wherein

the base stations (1 to 6) within an identical cluster (301) simultaneously perform a coordinated service on the user equipment (100, 200) positioned in the cluster (301), and wherein

a serving base station (1 to 6) within the cluster (301) transfers a feedback message from the user equipment (100, 200) to the communication control server.

**13.** A coordinated servicing method in a coordinated serving system, the coordinated serving system comprising: a communication control server; a user equipment (100, 200); and a plurality of base stations (1 to 6) divided into a plurality of clusters (301), the base stations (1 to 6) each holding cluster information (516), the method comprising:

a storing step (903) of storing a cluster information table (613) and a channel state information table (614) into the communication control server;

a feedback step (905), wherein the user equipment (100, 200) receives a joint codebook (704), extracts an identifier corresponding to a channel state, which is detected from the joint codebook (704) by the user equipment (100, 200), generates a feedback message including the identifier, and transmits the feedback message to a serving base station (1 to 6);

a transfer step (907), wherein the serving base station (1 to 6) transfers the feedback message, which is transmitted from the user equipment (100, 200), to the communication control server; and

a channel state information recovery step (908). wherein the communication control server having received the feedback message extracts, from the joint codebook (704), the channel state information (803) corresponding to the identifier contained in the feedback message, and updates the stored channel state information table (614) using the extracted channel state information (803), wherein

the cluster information table (613) holds a cluster identifier (701), an identifier for identifying the base station (1 to 6) within the cluster (301), and a joint codebook (704) shared by the base stations (1 to 6) within the cluster, and wherein

the joint codebook (704) holds an identifier for determining channel state information (803) and a distribution of the channel state information (803), and holds a user equipment identifier (801), the base station identifier (802), and the channel state information (803) associated with each other in the channel state information table (614).

**14.** The coordinated servicing method according to claim 13, wherein in the feedback step (905), the user equipment (100, 200) prepares a feedback set (1308) of the the base stations (1 to 6) within the cluster (301) based on the channel state detected by the network measurement unit (513), and includes, in the feedback set, the base station (1 to 6) whose channel state has reached a coordinated service level within the cluster.

**15.** The coordinated servicing method according to claim 14, wherein in the feedback step, (905) the user equipment (100, 200), based on the channel state detected by the network measurement unit (513), calculates a joint signal to noise ratio of all combinations allowing a coordinated service corresponding to each base station (1 to 6) within the cluster, to which each base station (1 to 6) belongs, to be performed, and sets a combination with the base station (1 to 6) having the largest joint signal to noise ratio to the feedback set.

# FIG. 1

USER EQUIPMENT100

USER EQUIPMENT200

BASE STATION 1

BASE STATION 2

# FIG. 2

301

BASE STATION 1
BASE STATION 2
BASE STATION 3
BASE STATION 4
BASE STATION 5
BASE STATION 6
BASE STATION 7
BASE STATION 8
BASE STATION 9
BASE STATION 10
BASE STATION 11
BASE STATION 12
BASE STATION 13
BASE STATION 14
BASE STATION 15
BASE STATION 16
BASE STATION 17
BASE STATION 18
BASE STATION 19
BASE STATION 20
BASE STATION 21
BASE STATION 22
BASE STATION 23
BASE STATION 24
BASE STATION 25
BASE STATION 26
BASE STATION 27
BASE STATION 28
BASE STATION 29
BASE STATION 30

FIG. 3

## FIG. 4

$(N_{t,1}+N_{t,2}+N_{t,3})*2^B$

$300 \sim$ CENTRALIZED CONTROLLER

$1 \sim$

BASE STATION 1

BASE STATION 2

BASE STATION 3

$I_1 h_1$

$I_2 h_2$

$I_3 h_3$

F

$(N_{t,1}+N_{t,2}+N_{t,3})*2^B$

$2 \sim$

USER EQUIPMENT 100

FIG. 5

BASEBAND ~410

COMMON PILOT — 406

401 PHYSICAL ANTENNA #1

402 PHYSICAL ANTENNA #2

403 MULTIPLEXING UNIT

404 RADIO FREQUENCY UNIT

405 COORDINATED SERVICE PRECODING

407 PILOT

408 PILOT

409 LAYER MAPPING

421

416 CHANNEL CODING MODULATION MODULE

411 TRANSMISSION RADIO FREQUENCY CONTROL AND MULTI-ANTENNA CONTROL

412 COUPLED TO GATEWAY

411 HIGH LAYER SIGNALING & CONTROL UNIT

423 COORDINATED SERVICE DECODING

417 TRAINING SEQUENCE

418 TRAINING SEQUENCE

419 LAYER DEMAPPING

415 CHANNEL DECODING DEMODULATION MODULE

422

424

TIME DIVISION CONTROL

413 CENTRALIZED-CONTROLLER INTERFACE

420 CHANNEL ESTIMATION UNIT

414 MULTI BASE STATION SERVICE & CONTROL UNIT (CLUSTER INFORMATION)

X2 INTERFACE — 427

426 JOINT PRECODING MODULE

425 CHANNEL STATE INFORMATION MODULE

EP 2 387 188 A2

FIG. 6

BASEBAND

502  503  504

508

505

PRECODING

CHANNEL CODING MODULATION MODULE

506

501

PHYSICAL ANTENNA

MULTIPLEXING UNIT

RADIO FREQUENCY UNIT

510

COUPLED TO ACCESS NETWORK

TRANSMISSION RADIO FREQUENCY CONTROL

509

512

511

HIGH LAYER SIGNALING & CONTROL UNIT

DECODING

LAYER DEMAPPING

CHANNEL DECODING DEMODULATION MODULE

517

513  CHANNEL ESTIMATION

FEEDBACK-SET CHANNEL STATE INFORMATION  515

514  ADAPTIVE FEEDBACK CONTROL

CLUSTER INFORMATION  516

EP 2 387 188 A2

22

## FIG. 7

INPUT INTERFACE ~601

RECEIVE BUFFER ~602

PROCESSOR ~605

OUTPUT INTERFACE ~603

TRANSMIT BUFFER ~604

**PROGRAM MEMORY** ~606

CHANNEL STATE INFORMATION RECOVERY MODULE ~608

607~ CLUSTERING MODULE

JOINT PRECODING MODULE ~609

BASIC CONTROL UNIT ~610

PACKET TRANSMIT AND RECEIVE MODULE ~611

**DATA MEMORY** ~612

613~ CLUSTER INFORMATION TABLE

614~ CHANNEL STATE INFORMATION TABLE

~615

EP 2 387 188 A2

## FIG. 8

| CLUSTER INDEX | BASE STATION ID/ CONTROL BASE STATION OPTION | BASE STATION ID/ CONTROL BASE STATION OPTION | BASE STATION ID/ CONTROL BASE STATION OPTION | JOINT CODEBOOK |
|---|---|---|---|---|
| 1 | 1-A/0 | 1-B/0 | 1-C/1 | $V_1$ |
| 2 | 2-A/0 | 2-B/1 | 2-C/0 | $V_2$ |
| 3 | 3-A/1 | 3-B/0 | 3-C/0 | $V_3$ |
| 4 | 4-A/1 | 4-B/0 | 4-C/0 | $V_4$ |
| ... | ... | ... | ... | ... |
| N | 5-A/0 | 5-B/1 | 5-C/0 | $V_N$ |

## FIG. 9

| USER EQUIPMENT ID | BASE STATION ID | CHANNEL STATE INFORMATION | BASE STATION ID | CHANNEL STATE INFORMATION | BASE STATION ID | CHANNEL STATE INFORMATION |
|---|---|---|---|---|---|---|
| USER EQUIPMENT 1 | 1-A | $h_{1A,1}$ | 1-B | $h_{1B,1}$ | 1-C | $h_{1C,1}$ |
| USER EQUIPMENT 2 | 2-A | $h_{2A,1}$ | 2-B | $h_{2B,1}$ | 2-C | $h_{2C,1}$ |
| USER EQUIPMENT 3 | 3-A | $h_{3A,1}$ | 3-B | $h_{3B,1}$ | 3-C | $h_{3C,1}$ |
| ... | ... | ... | ... | ... | ... | ... |
| USER EQUIPMENT m | N-A | $h_{NA,m}$ | 4-B | $h_{NB,m}$ | 4-C | $h_{NC,m}$ |

## FIG. 10

### |C|*N_t COLUMNS

| | | | | | | |
|---|---|---|---|---|---|---|
| **0000** | -0.2885 - 0.3766i | 0.3905 - 0.0213i | 0.0844 - 0.0964i | 0.4311 - 0.2459i | 0.3318 + 0.1451i | -0.1994 + 0.4339i |
| **0001** | -0.2574 - 0.0565i | -0.3988 - 0.0307i | -0.1160 + 0.2285i | 0.3122 - 0.2804i | -0.4023 - 0.0705i | -0.5657 - 0.2047i |
| **0010** | -0.0241 + 0.0109i | 0.4664 - 0.1907i | -0.1843 + 0.1627i | -0.4094 + 0.1680i | 0.1426 - 0.0619i | -0.2745 - 0.6242i |
| **0011** | 0.0429 - 0.3317i | 0.5157 - 0.3996i | 0.3297 + 0.0935i | -0.5117 - 0.1390i | -0.0255 + 0.0181i | -0.2207 - 0.1191i |
| **0100** | -0.1226 + 0.2736i | 0.0978 - 0.1028i | 0.1920 - 0.3642i | 0.5569 + 0.0832i | -0.3579 + 0.4095i | -0.2696 + 0.1867i |
| **....** **0011** | ... (2$^B$ROWS) | | | | | |

## FIG. 11

### |F|*N_t COLUMNS

| | | | | | | |
|---|---|---|---|---|---|---|
| **0000** | -0.2885 - 0.3766i | 0.3905 - 0.0213i | 0.0844 - 0.0964i | 0.4311 - 0.2459i | 0.3318 + 0.1451i | -0.1994 + 0.4339i |
| **0001** | -0.2574 - 0.0565i | -0.3988 - 0.0307i | -0.1160 + 0.2285i | 0.3122 - 0.2804i | -0.4023 - 0.0705i | -0.5657 - 0.2047i |
| **0010** | -0.0241 + 0.0109i | 0.4664 - 0.1907i | -0.1843 + 0.1627i | -0.4094 + 0.1680i | 0.1426 - 0.0619i | -0.2745 - 0.6242i |
| **0011** | 0.0429 - 0.3317i | 0.5157 - 0.3996i | 0.3297 + 0.0935i | -0.5117 - 0.1390i | -0.0255 + 0.0181i | -0.2207 - 0.1191i |
| **0100** | -0.1226 + 0.2736i | 0.0978 - 0.1028i | 0.1920 - 0.3642i | 0.5569 + 0.0832i | -0.3579 + 0.4095i | -0.2696 + 0.1867i |
| **....** **0011** | ... (2$^B$ROWS) | | | | | |

## FIG. 12

| | | | | | | |
|---|---|---|---|---|---|---|
| **0000** | -0.2885 - 0.3766i | 0.3905 - 0.0213i | 0.0844 - 0.0964i | 0.4311 - 0.2459i | 0.3318 + 0.1451i | -0.1994 + 0.4339i |
| **0001** | -0.2574 - 0.0565i | -0.3988 - 0.0307i | -0.1160 + 0.2285i | 0.3122 - 0.2804i | -0.4023 - 0.0705i | -0.5657 - 0.2047i |
| **0010** | -0.0241 + 0.0109i | 0.4664 - 0.1907i | -0.1843 + 0.1627i | -0.4094 + 0.1680i | 0.1426 - 0.0619i | -0.2745 - 0.6242i |
| **0011** | 0.0429 - 0.3317i | 0.5157 - 0.3996i | 0.3297 + 0.0935i | -0.5117 - 0.1390i | -0.0255 + 0.0181i | -0.2207 - 0.1191i |
| **0100** | -0.1226 + 0.2736i | 0.0978 - 0.1028i | 0.1920 - 0.3642i | 0.5569 + 0.0832i | -0.3579 + 0.4095i | -0.2696 + 0.1867i |
| **....** **0011** | ... (2$^4$ROWS) | | | | | |

# FIG. 13

| USER EQUIPMENT | BASE STATION 1 | BASE STATION 2 | BASE STATION 3 | CENTRALIZED CONTROLLER |

100 — USER EQUIPMENT

300 — CENTRALIZED CONTROLLER

RESULTS OF CLUSTERING THE BASE STATIONS ARE ALREADY TRANSMITTED FROM CENTRALIZED CONTROLLER TO ALL BASE STATIONS — 901

902 — SERVING BASE STATION NOTIFIES THE CLUSTERING INFORMATION TO A CORRESPONDING USER EQUIPMENT

903 — DOWNLOAD A JOINT CODEBOOK AND STORE THE CLUSTERING INFORMATION THEREIN

904 — CHANNEL ESTIMATION

905 — ADAPTIVE FEEDBACK CONTROL

906 — USER EQUIPMENT REPORTS TO A SERVING BASE STATION THE CHANNEL STATE INFORMATION BETWEEN THE USER EQUIPMENT AND A BASE STATION IN A FEEDBACK SET

907 — CHANNEL STATE INFORMATION IS REPORTED TO THE CENTRALIZED CONTROLLER BY THE SERVING BASE STATION

908 — RECOVER CHANNEL STATE INFORMATION

909 — DETERMINE A JOINT PREDECODING MATRIX

910 — NOTIFY THE MULTI BASE STATION JOINT PRECODING METHOD TO EACH BASE STATION

911 — NOTIFY A COORDINATED MULTI BASE STATION TRANSFER METHOD TO USER EQUIPMENT

912 — RESPOND

913 — START A COORDINATED MULTI BASE STATION WIRELESS TRANSFER SERVICE

## FIG. 14

START

USER EQUIPMENT ACQUIRES THE CHANNEL ESTIMATION RESULT OF A CLUSTER TO WHICH THE USER EQUIPMENT BELONGS ~1001

1002

FEEDBACK-SET SELECTION AND CALCULATION METHOD

SET THE FEEDBACK-SET TO AN EMPTY SET, SET A CANDIDATE BASE STATION-SET TO A CURRENT CLUSTER, AND SET THE SIGNAL TO NOISE RATIO TO 0 ~1006

SELECT A BASE STATION HAVING THE BEST CHANNEL STATE AMONG THE CANDIDATE SET ~1007

1008 ~ SIGNAL TO NOISE RATIO INCREASES? NO

YES

ADD THIS BASE STATION TO THE FEEDBACK SET AND DELETE THIS BASE STATION FROM THE CANDIDATE SET ~1009

NO CANDIDATE-SET IS EMPTY? ~1010

YES

DETERMINE A CURRENT FEEDBACK SET ~1011

RECONFIGUE THE JOINT CODEBOOK BASED ON THE FEEDBACK SET AND RETURN THE RECONFIGURATION METHOD ~1003

PERFORM QUANTIZATION AND RETURN THE CORRESPONDING CODE WORD IDENTIFIER ~1004

STORE THE RESULT INTO THE CHANNEL STATE INFORMATION IN THE FEEDBACK SET ~1005

END

# FIG. 15

START

1101 ~ ACQUIRE FEEDBACK SET INFORMATION AND CHANNEL STATE IDENTIFIER FROM CHANNEL STATE INFORMATION OF USER EQUIPMENT

1102 ~ THE FEEDBACK SET IS A SUB-SET OF THE BASE STATIONS WITHIN CLUSTER ?

NO

YES

1103 ~ TAILOR A BASE JOINT CODEBOOK ACCORDING TO THE FEEDBACK SET AND THE JOINT CODEBOOK TAILORING METHOD

1104 ~ EMPLOY THE BASE JOINT CODEBOOK

1105 ~ RECOVER THE CHANNEL STATE INFORMATION FROM THE CODEBOOK

END

## FIG. 16

| INFORMATION UNIT | MUST/OPTION | INFORMATION UNIT BASIC CONTENT AND REPRESENTATIVE DATA | ADDITIONAL EXPLANATION |
|---|---|---|---|
| MESSAGE TYPE | MUST | COORDINATED MULTI STATION REQUEST | |
| X2AP PROTOCOL INDEX CORRESPONDING TO USER EQUIPMENT OF SERVING BASE STATION | MUST | INTEGER (1..4095,...) | WITH THIS ITEM IDENTIFIER, ONE USER EQUIPMENT CAN BE UNIQUELY IDENTIFIED IN THE DIRECTION FROM A SERVICING BASE STATION TO A TARGET BASE STATION |
| BASE STATION ID | MUST | INTEGER (1..4095,...) | |
| BASE STATION RELATED CELL ID | MUST | INTEGER (1..4095,...) | |
| COORDINATED MULTI BASE STATION SERVICE REQUEST TYPE | MUST | ENUMERATION VALUE (START, STOP, ...) | |
| CONTENTS OF A REQUESTED REPORT | MUST | BIT SEQUENCE (WORD LENGTH (32)) | THE BIT OF EACH IDENTIFIER REPRESENTS ONE RELATED INFORMATION UNIT. A TARGET BASE STATION NEEDS TO REPORT THESE LISTED INFORMATION UNITS TO A SERVING BASE STATION FOR DISCUSSION. FOR EXAMPLE, 1ST BIT = PRECODING OPTION, 2ND BIT = OUTPUT POWER OF A COORDINATED SERVICE, 3RD BIT = MODULATION RATE. |
| REPORT PERIOD | OPTION | ENUMERATION VALUE (1000ms, 2000ms,,...) | |
| FEEDBACK-SET INFORMATION | MUST | BIT SEQUENCE WORD LENGTH 3 | XXX, EACH BIT REPRESENTS ONE BASE STATION (ARRANGED IN ASCENDING ORDER OF BASE STATION IDS), 0 INDICATES "UNSELECTED", 1 INDICATES "SELECTED". |
| FEEDBACK-SET CHANNEL STATE IDENTIFIER | MUST | CHANNEL STATE VECTOR IDENTIFIER AFTER QUANTIZATION | THE NUMBER OF BITS IS B, AND IS DETERMINED BASED ON THE SIZE OF THE JOINT CODEBOOK. |
| JOINT CODEBOOK TAILORING METHOD | MUST | ENUMERATION VALUE | METHOD 1: FROM THE 1ST DIMENSION BACKWARD TO THE $|F| *N_t$-TH DIMENSION<br>METHOD 2: SELECT $|F| *N_t$ DIMENSIONS CORRESPONDING TO THE FEEDBACK SET OF BASE STATIONS<br>METHOD 3: SELECT $|F| *N_t$ DIMENSIONS RANDOMLY |
| OTHER OPTION INFORMATION | OPTION | | |

EP 2 387 188 A2

# FIG. 17

FIG. 18

$(N_{t,1}+N_{t,2}+N_{t,3})*2^B$

BASE STATION 1

$(N_{t,1}+N_{t,2}+N_{t,3})*2^B$

$(N_{t,1}+N_{t,2}+N_{t,3})*2^B$

BASE STATION 2

F

$l_1 h_1$

$(N_{t,1}+N_{t,2}+N_{t,3})*2^B$

BASE STATION 3

$l_2 h_2$

$l_3 h_3$

$(N_{t,1}+N_{t,2}+N_{t,3})*2^B$

USER EQUIPMENT 100

EP 2 387 188 A2

## FIG. 19

CONTROL BASE STATION OF CLUSTER,
SERVING BASE STATION OF USER EQUIPMENT

| USER EQUIPMENT 100 | BASE STATION 1 | BASE STATION 2 | BASE STATION 3 |

2002

CLUSTER INFORMATION IS ALREADY STORED IN EACH BASE STATION — 2001

A SERVING BASE STATION NOTIFIES CLUSTER INFORMATION TO USER EQUIPMENT

USER EQUIPMENT DOWNLOADS A JOINT CODEBOOK AND STORES CLUSTER INFORMATION THEREIN — 2003

CHANNEL ESTIMATION — 2004

ADAPTIVE FEEDBACK CONTROL — 2005

USER EQUIPMENT REPORTS CHANNEL STATE INFORMATION BETWEEN THE USER EQUIPMENT AND A BASE STATION IN THE FEEDBACK SET TO A SERVING BASE STATION — 2006

RECOVER CHANNEL STATE INFORMATION — 2007

DETERMINE THE JOINT PRECODING METHOD — 2008

2009 — NOTIFY THE MULTI BASE STATION PRECODING METHOD TO EACH BASE STATION

2010

NOTIFY THE COORDINATED MULTI BASE STATION TRANSFER METHOD TO USER EQUIPMENT

RESPOND — 2011          2012

START A COORDINATED MULTI BASE STATION WIRELESS TRANSMISSION SERVICE

32

FIG. 20

SERVING BASE STATION OF
USER EQUIPMENT

CONTROL BASE STATION OF
CLUSTER

| USER EQUIPMENT 100 | BASE STATION 4 | BASE STATION 5 | BASE STATION 6 |

CLUSTER INFORMATION IS ALREADY STORED INTO EACH BASE STATION

2101

2102

SERVING BASE STATION
NOTIFIES CLUSTER INFORMATION
TO USER EQUIPMENT

USER EQUIPMENT DOWNLOADS
THE JOINT CODEBOOK AND
STORES CLUSTER INFORMATION THEREIN — 2103

CHANNEL ESTIMATION — 2104

ADAPTIVE FEEDBACK CONTROL — 2105

USER EQUIPMENT REPORTS CHANNEL STATE
INFORMATION BETWEEN THE USER EQUIPMENT
AND A BASE STATION IN
A FEEDBACK SET TO
A SERVING BASE STATION — 2106

2107

TRANSFER CHANNEL STATE
INFORMATION

RECOVER CHANNEL STATE
INFORMATION — 2108

DETERMINE THE JOINT
PRECODING METHOD — 2109

2110 — NOTIFY THE MULTI BASE STATION PRECODING
METHOD TO EACH BASE STATION

2111

NOTIFY THE COORDINATED
MULTI BASE STATION TRANSFER
METHOD TO USER EQUIPMENT

RESPOND — 2112

2113

START THE COORDINATED
MULTI BASE STATION WIRELESS
TRANSMISSION SERVICE

## FIG. 21

BASE STATION 1 $\quad$ BASE STATION 2 $\quad$ BASE STATION 3

$N_{t,1}*2^{B1}$ $\quad$ $N_{t,2}*2^{B2}$ $\quad$ $N_{t,3}*2^{B3}$

$l_1 h_1$ $\quad$ $l_2 h_2$ $\quad$ $l_3 h_3$

$\phi_2$ $\quad$ $\phi_3$

$\hat{h}$

USER EQUIPMENT 100

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 200810035767